# EUROPEAN PATENT APPLICATION

(11) **EP 3 038 419 A1**
(43) Date of publication of application: **29.06.2016**
(21) Application number: 14838226.0
(22) Date of filing: 08.08.2014
(51) Int. Cl.: H04W 72/04, H04W 16/32

(54) **WIRELESS COMMUNICATION SYSTEM, BASE STATION DEVICE, TERMINAL DEVICE, WIRELESS COMMUNICATION METHOD, AND INTEGRATED CIRCUIT**

(30) Priority: 20.08.2013 JP 2013170066
(71) Applicant: Sharp Kabushiki Kaisha, Osaka-shi, Osaka 545-8522 (JP)
(72) Inventor: KATO Yasuyuki, Osaka-shi Osaka 545-8522 (JP); UEMURA Katsunari, Osaka-shi Osaka 545-8522 (JP)
(74) Representative: Müller-Boré & Partner Patentanwälte PartG mbB
(86) International application number: PCT/JP2014/071010
(87) International publication number: WO 2015/025738

(57) **Abstract**

There is provided a wireless communication system in which a first base station apparatus and a second base station apparatus communicate with a terminal apparatus through a plurality of cells, in which the plurality of cells is grouped into a first group which includes one or more cells having a first uplink transmission timing and includes a first cell belonging to the first base station apparatus, a second group which includes one or more cells having a second uplink transmission timing and includes a second cell belonging to the second base station apparatus, and a third group which includes one or more third cells having a third uplink transmission timing and belong to the first base station apparatus or the second base station apparatus, and in which the first base station apparatus notifies the terminal apparatus of information related to the groups and information of the transmission timing timers and the terminal apparatus manages the groups based on the information related to the groups, and controls the groups for each base station apparatus.

## Description

### TECHNICAL FIELD

The present invention relates to a wireless communication system, a base station apparatus and a terminal apparatus, and more particularly, to a wireless communication system, a base station apparatus, a terminal apparatus, a wireless communication method, and an integrated circuit which are related to the transmission and reception control of data.

The present application claims priority to Japanese Patent Application No. 2013-170066 filed in the Japanese Patent Office on August 20, 2013, the disclosure of which is herein incorporated by reference in its entirety.

### BACKGROUND ART

In the 3GPP (3rd Generation Partnership Project), a W-CDMA system has been standardized as a 3rd generation cellular mobile communication system, and services have been launched. HSDPA having a higher communication speed has been also standardized, and services have been launched.

Meanwhile, an evolved 3rd radio access (Evolved Universal Terrestrial Radio Access: hereinafter, referred to as "EUTRA") technology has been standardized, and services have been launched in the 3GPP. As a downlink communication system of EUTRA, an OFDM (Orthogonal Frequency Division Multiplexing) system has been employed that has resistance to multipath interference and is appropriate for high-speed transmission. As an uplink communication system, there has been employed a DFT (Discrete Fourier Transform)-spread OFDM system of SC-FDMA (Single Carrier-Frequency Division Multiple Access) that can reduce the PAPR (peak-to-average power ratio) of a transmission signal in consideration of cost and power consumption of mobile station apparatuses.

In the 3GPP, discussion on the Advanced-EUTRA which is further evolution of the EUTRA technology has been started. In the Advanced-EUTRA, it is assumed that communication is performed at a maximum transmission rate of 1 Gbps or more in a downlink and at a transmission rate of 500 Mbps or more in an uplink by using a band up to a maximum bandwidth of 100 MHz in the uplink and the downlink.

In the Advanced-EUTRA, it is considered that a maximum bandwidth of 100 MHz is achieved by binding a plurality of bands compatible with the EUTRA such that a mobile station apparatus of the EUTRA can be accommodated. In the Advanced-EUTRA, one band of 20 MHz or less in the EUTRA is called a component carrier (CC). The component carrier is also called a cell. The binding of the bands of 20 MHz or less is called carrier aggregation (CA) (NPL 1).

In the Advanced-EUTRA, it has been examined that a macrocell and small cells present in the coverage of the macrocell, or the small cells are simultaneously connected using the same technique as the carrier aggregation. The small cells being present in the coverage of the macrocell may mean that frequencies are different. NPL 2 discloses that in the communication between the base station apparatus and the mobile station apparatus, control information (control-plane information) is transmitted in the macrocell, and user information (user-plane information) is transmitted in the small cell in a case where the mobile station apparatus is simultaneously connected to the macrocell and the small cell. The technology disclosed in NPL 2 in which the mobile station apparatus is simultaneously connected to the macrocell and the small cell is called dual connect (or dual connectivity).

### CITATION LIST

### [NON PATENT DOCUMENT]

[NON PATENT DOCUMENT 1] 3GPP TS (Technical Specification) 36.300, V11.5.0 (2013-03), Evolved Universal Terrestrial Radio Access (E-UTRA) and Evolved Universal Terrestrial Radio Access Network (E-UTRAN), Overall description Stage2
[NON PATENT DOCUMENT 2] 3GPP TR (Technical Report) 36.842, V0.2.0 (2013-05), Study on Small Cell Enhancements for E-UTRA and E-UTRAN - Higher layer aspects (release 12)

### DISCLOSURE OF THE INVENTION

### Problems to be Solved by the Invention

However, as disclosed in NPL 2, in the communication between the base station apparatus and the mobile station apparatus, in the case where the control information is transmitted and received between the mobile station apparatus and the base station apparatus as the macrocell and the user information is transmitted and received between the mobile station apparatus and the base station apparatus as the small cell, it is necessary to perform control such that the control information and the user information are transmitted from an appropriate cell.

Since the base station apparatuses are connected through a low-speed line having delay, it is considered that the base station apparatus as the macrocell and the base station apparatus as the small cell independently perform control related to the scheduling of downlink and uplink data, the transmission of downlink data and the transmission of data with respect to the mobile station apparatus in consideration of the delay of the line between the base station apparatuses.

Both the base station apparatuses do not know which control is performed on the mobile station apparatus by the other base station apparatus. Thus, the transmission timing control of the uplink related to the data transmission performed between one base station apparatus and the mobile station apparatus is not efficient in performing the transmission timing control between a plurality of base station apparatuses and the mobile station apparatus in dual connect.

The present invention has been made in view of such circumstances, and it is an object of the present invention to provide a wireless communication system, a base station apparatus, a mobile station apparatus, a wireless communication method, and an integrated circuit which are capable of efficiently performing the transmission timing relevant control of a mobile station apparatus in dual connect.

### Means for Solving the Problems

(1) In order to achieve the aforementioned object, an aspect of the present invention provides the following means. That is, according to a first aspect of the present invention, there is provided a wireless communication system in which a first base station apparatus and a second base station apparatus communicate with a terminal apparatus through a plurality of cells, in which the plurality of cells is grouped into a first group which includes one or more cells having a first uplink transmission timing and includes a first cell belonging to the first base station apparatus, a second group which includes one or more cells having a second uplink transmission timing different from the first uplink transmission timing and includes a second cell belonging to the second base station apparatus, and a third group which includes one or more third cells having a third uplink transmission timing different from the first uplink transmission timing and the second uplink transmission timing and belonging to the first base station apparatus or the second base station apparatus, in which control is performed using transmission timing timers started or restarted in a case where transmission timing information is applied to the respective groups, in which the first base station apparatus notifies the terminal apparatus of information related to the groups and information of the transmission timing timers, and in which the terminal apparatus manages the groups based on the information related to the groups, and controls the groups for each base station apparatus.
(2) According to a second aspect of the present invention, in the wireless communication system described in (1), the terminal apparatus may be adapted to: remove data of a transmission HARQ buffer corresponding to the cell of the first group and the cell of the third group belonging to the first base station apparatus in a case where a transmission timing timer of the first group expires; remove data of a transmission HARQ buffer corresponding to the cell of the second group and the cell of the third group belonging to the second base station apparatus in a case where a transmission timing timer of the second group expires; and remove data of a transmission HARQ buffer corresponding to the cell of the third group in which a transmission timing timer expires in a case where the transmission timing timer of the third group expires.
(3) According to a third aspect of the present invention, in the wireless communication system described in (2), an uplink control channel may be configured as configuration for the second cell belonging to the second base station apparatus.
(4) According to a fourth aspect of the present invention, there is provided a terminal apparatus that communicates with a first base station apparatus and a second base station apparatus through a plurality of cells, in which the plurality of cells is grouped into a first group which includes one or more cells having a first uplink transmission timing and includes a first cell belonging to the first base station apparatus, a second group which includes one or more cells having a second uplink transmission timing different from the first uplink transmission timing and includes a second cell belonging to the second base station apparatus, and a third group which includes one or more third cells having a third uplink transmission timing different from the first uplink transmission timing and the second uplink transmission timing and belonging to the first base station apparatus or the second base station apparatus, in which control is performed using transmission timing timers started or restarted in a case where transmission timing information is applied to the respective groups, and in which the terminal apparatus receives information related to the groups and information of the transmission timing timers from the first base station apparatus, manages the groups based on the information related to the groups, and controls the groups for each base station apparatus.
(5) According to a fifth aspect of the present invention, in the terminal apparatus described in (4), the terminal apparatus may be adapted to: remove data of a transmission HARQ buffer corresponding to the cell of the first group and the cell of the third group belonging to the first base station apparatus in a case where the transmission timing timer of the first group expires; remove data of a transmission HARQ buffer corresponding to the cell of the second group and the cell of the third group belonging to the second base station apparatus in a case where a transmission timing timer of the second group expires; and remove data of a transmission HARQ buffer corresponding to the cell of the third group in which a transmission timing timer expires in a case where the transmission timing timer of the third group expires.
(6) According to a sixth aspect of the present invention, in the terminal apparatus described in (5), the terminal apparatus may be adapted to: release an uplink control channel assigned to the first cell in the case where the transmission timing timer of the first group expires; and release an uplink control channel assigned to the second cell in the case where the transmission timing timer of the second group expires.
(7) According to a seventh aspect of the present invention, in the terminal apparatus described in (6), the terminal apparatus may be adapted to: inhibit uplink transmission in the cell of the first group and the cell of the third group belonging to the first base station apparatus, other than random access preamble transmission in the first cell, in a case where the transmission timing timer of the first group is stopped; and inhibit uplink transmission in the cell of the second group and the cell of the third group belonging to the second base station apparatus, other than random access preamble transmission in the second cell, in the case where the transmission timing timer of the second group is stopped.
(8) According to an eighth aspect of the present invention, there is provided a base station apparatus that communicates with a terminal apparatus through a plurality of cells, together with a first base station apparatus, in which the plurality of cells is grouped into a first group which includes one or more cells having a first uplink transmission timing and includes a first cell belonging to the first base station apparatus, a second group which includes one or more cells having a second uplink transmission timing different from the first uplink transmission timing and includes a second cell belonging to the base station apparatus, and a third group which includes one or more third cells having a third uplink transmission timing different from the first uplink transmission timing and the second uplink transmission timing and belonging to the first base station apparatus or the base station apparatus, in which control is performed using a transmission timing timers started or restarted in a case where transmission timing information is applied to the respective groups, and in which the base station apparatus receives information related to the second group and the third group of the first base station apparatus and information of the transmission timing timers from the first base station apparatus, and notifies the terminal apparatus of information related to the first group, the second group and the third group and information of the transmission timing timers.
(9) According to a ninth aspect of the present invention, there is provided a wireless communication method of a wireless communication system in which a first base station apparatus and a second base station apparatus communicate with a terminal apparatus through a plurality of cells, the wireless communication method including: grouping the plurality of cells into a first group which includes one or more cells having a first uplink transmission timing and includes a first cell belonging to the first base station apparatus, a second group which includes one or more cells having a second uplink transmission timing different from the first uplink transmission timing and includes a second cell belonging to the second base station apparatus, and a third group which includes one or more third cells having a third uplink transmission timing different from the first uplink transmission timing and the second uplink transmission timing and belonging to the first base station apparatus or the second base station apparatus; performing control using transmission timing timers started or restarted in a case where transmission timing information is applied to the respective groups; a step of notifying, by the first base station apparatus, the terminal apparatus of information related to the groups and information of the transmission timing timers; a step of removing, by the terminal apparatus, data of a transmission HARQ buffer corresponding to the cell of the first group and the cell of the third group belonging to the first base station apparatus in a case where a transmission timing timer of the first group expires; a step of removing, by the terminal apparatus, data of a transmission HARQ buffer corresponding to the cell of the second group and the cell of the third group belonging to the second base station apparatus in a case where a transmission timing timer of the second group expires; and a step of removing, by the terminal apparatus, data of a transmission HARQ buffer corresponding to the cell of the third group in which a transmission timing timer expires in a case where a transmission timing timer of the third group expires.
(10) According to a tenth aspect of the present invention, there is provided an integrated circuit applied to a second base station apparatus that communicates with a terminal apparatus through a plurality of cells, together with a first base station apparatus, in which the plurality of cells is grouped into a first group which includes one or more cells having a first uplink transmission timing and includes a first cell belonging to the first base station apparatus, a second group which includes one or more cells having a second uplink transmission timing different from the first uplink transmission timing and includes a second cell belonging to the second base station apparatus, and a third group which includes one or more third cells having a third uplink transmission timing different from the first uplink transmission timing and the second uplink transmission timing and belonging to the first base station apparatus or the second base station apparatus, in which control is performed using transmission timing timers started or restarted in a case where transmission timing information is applied to the respective groups, and in which the integrated circuit includes means for receiving information related to the second group and the third group of the first base station apparatus and information of the transmission timing timer from the first base station apparatus, and means for notifying the terminal apparatus of information related to the first group, the second group and the third group and the information of the transmission timing timers.
(11) According to an eleventh aspect of the present invention, there is provided an integrated circuit applied to a terminal apparatus that communicates with a first base station apparatus and a second base station apparatus through a plurality of cells, in which the plurality of cells is grouped into a first group which includes one or more cells having a first uplink transmission timing and includes a first cell belonging to the first base station apparatus, a second group which includes one or more cells having a second uplink transmission timing different from the first uplink transmission timing and includes a second cell belonging to the second base station apparatus, and a third group which includes one or more third cells having a third uplink transmission timing different from the first uplink transmission timing and the second uplink transmission timing and belonging to the first base station apparatus or the second base station apparatus, in which control is performed using transmission timing timers started or restarted in a case where transmission timing information is applied to the respective groups, and in which the integrated circuit includes means for receiving information related to the groups and information of the transmission timing timer from the first base station apparatus, means for managing the groups based on the information related to the groups, and means for controlling the group for each base station apparatus.
(12) According to a twelfth aspect of the present invention, the integrated circuit described in (11) may further include: means for removing data of a transmission HARQ buffer corresponding to the cell of the first group and the cell of the third group belonging to the first base station apparatus in a case where a transmission timing timer of the first group expires; means for removing data of a transmission HARQ buffer corresponding to the second group and the cell of the third group belonging to the second base station apparatus in a case where a transmission timing timer of the second group expires; and means for removing data of a transmission HARQ buffer corresponding to the cell of the third group in which a transmission timing timer expires in a case where the transmission timing timer of the third group expires.

### Effects of the Invention

According to the aspect of the present invention, it is possible to efficiently perform transmission timing control in a mobile station apparatus in dual connect. A base station apparatus can efficiently perform data scheduling on a mobile station apparatus.

### BRIEF DESCRIPTION OF THE DRAWINGS

[Fig. 1] Fig. 1 is a diagram showing an example of the structure of a mobile station apparatus according to an embodiment of the present invention.
[Fig. 2] Fig. 2 is a diagram showing an example of the structure of a base station apparatus according to the embodiment of the present invention.
[Fig. 3] Fig. 3 is a diagram showing an example of connection in dual connect of the present invention.
[Fig. 4] Fig. 4 is a diagram showing an example of connection in the dual connect of the present invention.
[Fig. 5] Fig. 5 is a diagram showing an example of the structure of a cell according to the embodiment of the present invention.
[Fig. 6] Fig. 6 is a diagram showing an example of the structure of the cell according to the embodiment of the present invention.
[Fig. 7] Fig. 7 is a diagram showing an example of the structure of a physical channel in EUTRA.
[Fig. 8] Fig. 8 is a diagram showing an example of the structure of a downlink channel in the EUTRA.
[Fig. 9] Fig. 9 is a diagram showing an example of the structure of an uplink channel in the EUTRA.
[Fig. 10] Fig. 10 is a diagram showing an example of the structure of a communication protocol related to control information of the base station apparatus and the mobile station apparatus.
[Fig. 11] Fig. 11 is a diagram showing an example of the structure of a communication protocol related to user information of the base station apparatus and the mobile station apparatus.
[Fig. 12] Fig. 12 is a diagram showing a contention based random access procedure.
[Fig. 13] Fig. 13 is a diagram showing a non-contention based random access procedure.
[Fig. 14] Fig. 14 is an explanatory diagram for describing an example of an update procedure of a transmission timing.
[Fig. 15] Fig. 15 is an explanatory diagram for describing an example of the dual connect.

### MODE FOR CARRYING OUT THE INVENTION

An OFDM scheme is adopted as a downlink of EUTRA. A single carrier communication scheme of a DFT-spread OFDM scheme is adopted as an uplink of the EUTRA.

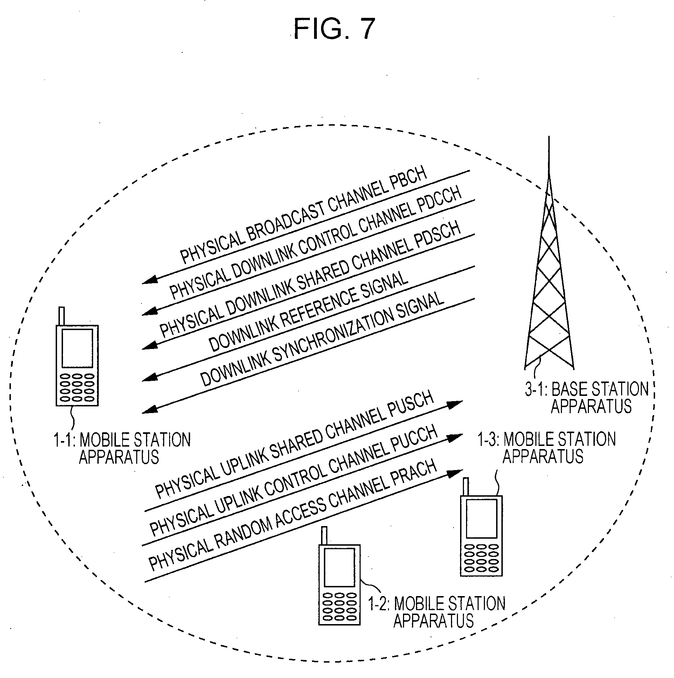

Fig. 7 is a diagram showing the structure of a physical channel of the EUTRA. A physical channel of the downlink includes a PDSCH (physical downlink shared channel), a PDCCH (physical downlink control channel), and a PBCH (physical broadcast channel). In addition, there are physical signals such as a downlink synchronization signal and a downlink reference signal (NPL 1).

A physical channel of the uplink includes a PRACH (physical random access channel), a PUSCH (physical uplink shared channel), and a PUCCH (physical uplink control channel). In addition, there is a physical signal such as an uplink reference signal. As the uplink reference signal, there are a demodulation reference signal (DRS) and a sounding reference signal (SRS). As the sounding reference signal, there are a periodic sounding reference signal (periodic SRS) and an aperiodic sounding reference signal (aperiodic SRS). Hereinafter, the sounding reference signal indicates the periodic sounding reference signal unless the context clearly indicates otherwise (NPL 1).

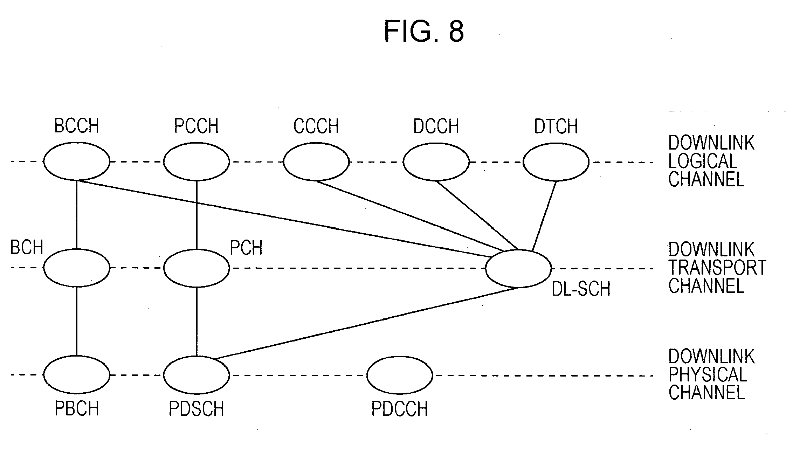

Fig. 8 is a diagram showing a channel structure of the downlink of the EUTRA. The channel of the downlink shown in Fig. 8 includes a logical channel, a transport channel, and a physical channel. The logical channel defines the type of a data transmission service transmitted and received in a medium access control (MAC) layer. The transport channel defines the characteristics of data to be transmitted by a wireless interface and how to transmit the data. The physical channel is a physical channel that delivers data transferred to a physical layer by the transport channel.

The logical channel of the downlink includes a BCCH (broadcast control channel), a PCCH (paging control channel), a CCCH (common control channel), a DCCH (dedicated control channel), and a DTCH (dedicated traffic channel).

The transport channel of the downlink includes a broadcast channel BCH, a paging channel PCH, and a downlink shared channel DL-SCH.

The physical channel of the downlink includes a physical broadcast channel PBCH, a physical downlink control channel PDCCH, and a physical downlink shared channel PDSCH. These channels are transmitted and received between a base station apparatus and a mobile station apparatus.

Hereinafter, the logical channel will be described. The broadcast control channel BCCH is a downlink channel used to broadcast system control information. The paging control channel PCCH is a downlink channel used to transmit paging information, and is used in a case where a network does not know a cell position of the mobile station apparatus. The common control channel CCCH is a channel used to transmit control information between the mobile station apparatus and the network, and is used by the mobile station apparatus that does not have radio resource control (RRC) connection with the network.

The dedicated control channel DCCH is a point-to-point duplex channel, and is a channel used to transmit individual control information between the mobile station apparatus and the network. The dedicated control channel DCCH is used by the mobile station apparatus having RRC connection. The dedicated traffic channel DTCH is a point-to-point duplex channel, and is a dedicated channel of one mobile station apparatus, and is used to transport user information (unicast data).

Hereinafter, the transport channel will be described. The broadcast channel BCH is broadcasted to all cells according to a fixed or previously defined transmission format. In the downlink shared channel DL-SCH, HARQ (hybrid automatic repeat request), dynamic adaptation radio link control, discontinuous reception (DRX) are supported, and it is necessary for the DL-SCH to be broadcasted to all the cells.

In the paging channel PCH, the DRX is supported, and it is necessary for the PCH to be broadcast to all the cells. The paging channel PCH is mapped to a physical resource dynamically used for the traffic channel or other control channel, that is, the physical downlink shared channel PDSCH.

Hereinafter, the physical channel will be described. The physical broadcast channel PBCH maps the broadcast channel BCH at a cycle of 40 milliseconds. The physical downlink control channel PDCCH is a channel used to notify the mobile station apparatus of the radio resource assignment (downlink assignment) of the downlink shared channel PDSCH, hybrid automatic repeat request (HARQ) information for the downlink data, and an uplink transmission permission (uplink grant) which is the radio resource assignment of the physical downlink shared channel PUSCH. The physical downlink shared channel PDSCH is a channel used to transmit downlink data or paging information.

The physical downlink control channels PDCCHs are set in 1 to 3 symbol OFDMs of a resource block from the head of one subframe, and the downlink shared channels PDSCHs are set in the remaining OFDM symbols. One subframe includes two resource blocks, and one frame includes 10 subframes. One resource block includes 12 subcarriers and 7 OFDM symbols.

In a case where the base station apparatus notifies the mobile station apparatus of the radio resource assignment of the physical downlink shared channel PDSCH to the mobile station apparatus using the physical downlink control channel PDCCH, a region of the downlink shared channel PDSCH assigned to the mobile station apparatus is the physical downlink shared channel PDSCH within the same subframe as the physical downlink control channel PDCCH notified of the downlink assignment.

Hereinafter, the channel mapping will be described. As shown in Fig. 8, in the downlink, the mapping of the transport channel to the physical channel is performed as follows. The broadcast channel BCH is mapped to the physical broadcast channel PBCH. The paging channel PCH and the downlink shared channel DL-SCH are mapped to the physical downlink shared channel PDSCH. The physical downlink control channel PDCCH is independently used as the physical channel.

In the downlink, the mapping of the logical channel to the transport channel is performed as follows. The paging control channel PCCH is mapped to the paging channel PCH. The broadcast control channel BCCH is mapped to the broadcast channel BCH and the downlink shared channel DL-SCH. The shared control channel CCCH, the dedicated control channel DCCH and the dedicated traffic channel DTCH are mapped to the downlink shared channel DL-SCH.

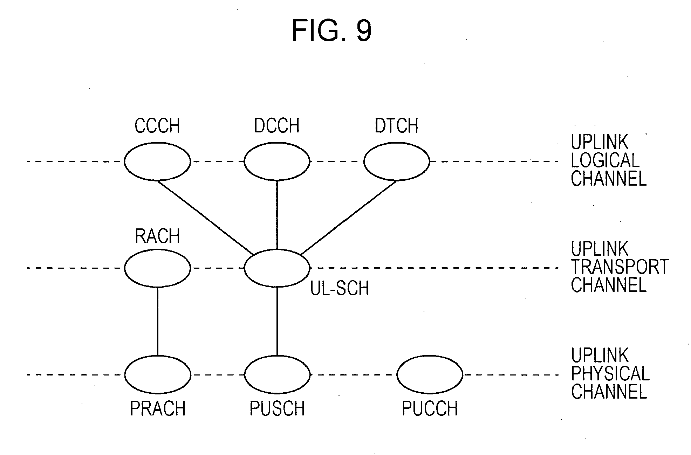

Fig. 9 is a diagram showing a channel structure of an uplink of the EUTRA. The channel of the uplink shown in Fig. 9 includes a logical channel, a transport channel, and a physical channel. The definitions of the channels are the same as those of the channels of the downlink.

The logical channel of the uplink includes a common control channel CCCH, a dedicated control channel DCCH, and a dedicated traffic channel DTCH.

The transport channel of the uplink includes an uplink shared channel UL-SCH, and a random access channel RACH.

The physical channel of the uplink includes a physical uplink control channel PUCCH, a physical uplink shared channel PUSCH, and a physical random access channel PRACH. These channels are transmitted and received between the base station apparatus and the mobile station apparatus.

Hereinafter, the logical channel will be described. The common control channel CCCH is a channel used to transmit control information between the mobile station apparatus and the network, and is used by the mobile station apparatus which does not have radio resource control (RRC) connection with the network.

The dedicated control channel DCCH is a point-to-point duplex channel, and is a channel used to transmit individual control information between the mobile station apparatus and the network. The dedicated control channel DCCH is used by the mobile station apparatus having RRC connection. The dedicated traffic channel DTCH is point-to-point duplex channel, is a dedicated channel of one mobile station apparatus, and is used to transport user information (unicast data).

Hereinafter, the transport channel will be described. In the uplink shared channel UL-SCH, hybrid automatic repeat request (HARQ), dynamic adaptation radio link control, and discontinuous transmission (DTX) are supported. In the random access channel RACH, limited control information is transmitted.

Hereinafter, the physical channel will be described. The physical uplink control channel PUCCH is a channel used to notify the base station apparatus of response information (ACK (acknowledge)/NACK (negative acknowledge)) to the downlink data, radio quality information of the downlink, and a transmission request (scheduling request (SR)) of uplink data. The physical uplink shared channel PUSCH is a channel used to transmit the uplink data. The physical random access channel PRACH is primarily used to transmit a random access preamble for acquiring transmission timing information to the base station apparatus from the mobile station apparatus. The random access preamble is transmitted during a random access procedure.

Hereinafter, the channel mapping will be described. As shown in Fig. 9, in the uplink, the mapping of the transport channel to the physical channel is performed as follows. The uplink shared channel UL-SCH is mapped to the physical uplink shared channel PUSCH. The random access channel RACH is mapped to the physical random access channel PRACH. The physical uplink control channel PUCCH is independently used as the physical channel.

In the uplink, the mapping of the logical channel to the transport channel is performed as follows. The common control channel CCCH, the dedicated control channel DCCH and the dedicated traffic channel DTCH are mapped to the uplink shared channel UL-SCH.

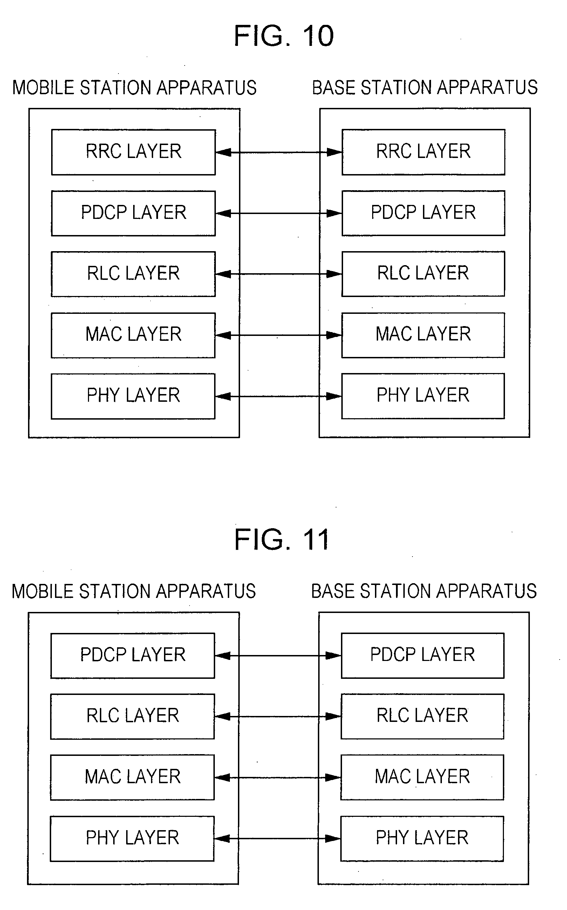

Fig. 10 shows a protocol stack which handles control data of the mobile station apparatus and the base station apparatus of the EUTRA. Fig. 11 is a protocol stack which handles user data of the mobile station apparatus and the base station apparatus of the EUTRA. Figs. 10 and 11 will be described below.

A physical layer (PHY layer) provides a transport service to a higher layer by using the physical channel. The PHY layer is connected to a medium access control layer (MAC layer) as a higher layer by using the transport channel. Data moves between the MAC layer, the PHY layer and layers by using the transport channel. Data is transmitted and received between the PHY layers of the mobile station apparatus and the base station apparatus by using the physical channel.

The MAC layer maps various logical channels to various transport channels. The MAC layer is connected to a radio link control layer (RLC layer) as a higher layer by using the logical channel. The logical channel is greatly classified according to the kind of information to be transported, and is classified into a control channel which transports the control information and a traffic channel which transport the user information. The MAC layer has a function of controlling the PHY layer in order to perform discontinuous reception and transmission (DRX and DTX), a function of notifying of information regarding transmission power, and a function of performing HARQ control.

The MAC layer has a function (buffer status report: BSR) of notifying of data amount of a transmission buffer corresponding to each logical channel, and a function of performing a radio resource request (scheduling request) for transmitting uplink data. The MAC layer performs a random access procedure in a case where initial access or scheduling request is performed.

In a case where the carrier aggregation is performed, the MAC layer has a function of controlling the PHY layer in order to activate/deactivate the cell, and a function of controlling the PHY layer in order to manage an uplink transmission timing.

The RLC layer controls data size such that the higher layer can appropriately transmit data by performing segmentation and concatenation on data received from the higher layer. The RLC layer has a function of guaranteeing quality of service (QoS) required by data. That is, the RLC layer has a function such as retransmission control of data.

A packet data convergence protocol layer (PDCP layer) has a header compression function of compressing unnecessary control information in order to efficiently transport an IP packet which is user data in a wireless section. The PDCP layer has a function of data ciphering.

The radio resource control layer (RRC layer) defines only control information. The RRC layer configures or reconfigures a radio bearer (RB), and controls the logical channel, the transport channel and the physical channel. The RB is classified into a signaling radio bearer (SRB) and a data radio bearer (DRB), and the SRB is used as a path for transmitting an RRC message which is control information. The DRB is used as a path for transmitting user information. The respective RBs are configured between the RRC layers of the base station apparatus and the mobile station apparatus.

The PHY layer corresponds to a physical layer as a first layer in a layered structure of an open systems interconnection (OSI) model that is generally known, the MAC layer, the RLC layer and the PDCP layer correspond to a data link layer as a second layer of the OSI model, and the RRC layer corresponds to a network layer as a third layer of the OSI model.

The random access procedure will be described. The random access procedure includes two access procedures including a contention based random access procedure and a non-contention based random access procedure (NPL 1).

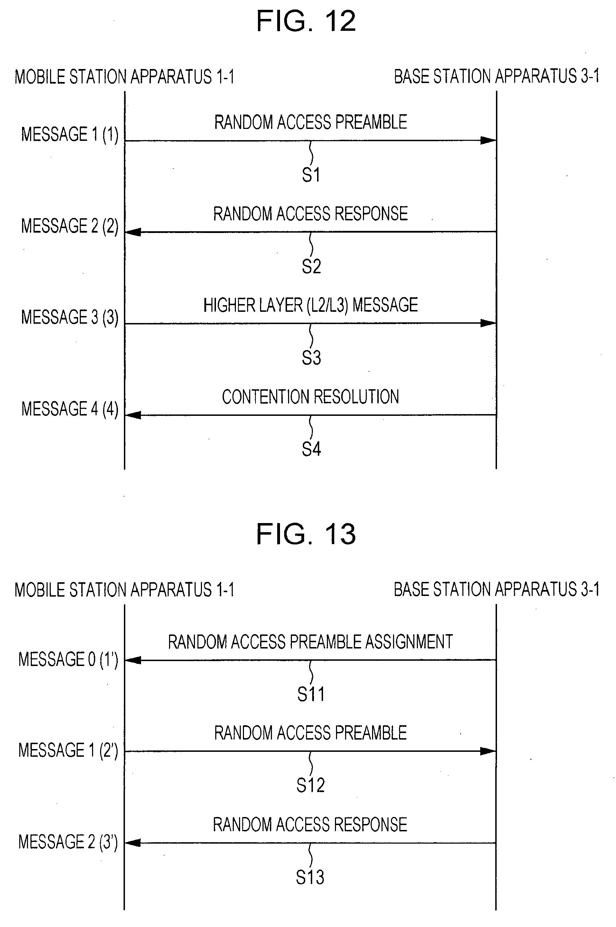

Fig. 12 is a diagram showing the contention based random access procedure. The contention based random access procedure is random access in which collision between the mobile station apparatuses is likely to occur. The contention based random access procedure is performed by a scheduling request in a case where the uplink data is transmitted to the mobile station apparatus in a state in which the mobile station apparatus is connected to the base station apparatus but the uplink is not synchronized or in a case where initial access is performed in a state in which the mobile station apparatus is not connected to (does not communicate with) the base station apparatus.

Fig. 13 is a diagram showing the non-contention based random access procedure. The non-contention based random access procedure is random access in which collision between the mobile station apparatuses does not occur. In the non-contention based random access procedure, the mobile station apparatus starts random access by being instructed from the base station apparatus in a special case such as a case where the transmission timing of the mobile station apparatus is not valid or handover in order to rapidly achieve the uplink synchronization between the mobile station apparatus and the base station apparatus in a case where the base station apparatus and the mobile station apparatus are being connected but the uplink is not synchronized (NPL 1). The non-contention based random access procedure is instructed by a message of the RRC (radio resource control: layer 3) layer and control data of the downlink control channel PDCCH.

The contention based random access procedure will be briefly described with reference to Fig. 12. Initially, a mobile station apparatus 1-1 transmits the random access preamble to a base station apparatus 3-1 (message 1:(1), step S1). The base station apparatus 3-1 received the random access preamble transmits the response (random access response) to the random access preamble to the mobile station apparatus 1-1 (message 2:(2), step S2). The mobile station apparatus 1-1 transmits the higher layer (layer2/layer3) message based on scheduling information included in the random access response (message 3:(3), step S3). The base station apparatus 3-1 transmits a collision check message to the mobile station apparatus 1-1 received the higher layer message of (3) (message 4:(4), step S4). The contention based random access is also referred to random preamble transmission.

The non-contention based random access procedure will be briefly described with reference to Fig. 13. Initially, the base station apparatus 3-1 notifies the mobile station apparatus 1-1 of a preamble number (or a sequence number) and a random access channel number to be used (message 0:(1'), step S11). The mobile station apparatus 1-1 transmits a random access preamble of a designated preamble number to a designated random access channel (RACH) (message 1 :(2'), step S12). The base station apparatus 3-1 received the random access preamble transmits a response (random access response) to the random access preamble to the mobile station apparatus 1-1 (message 2:(3'), step S13). However, in a case where a value of the notified preamble number is 0, the contention based random access is performed. The non-contention based random access is also referred to as dedicated preamble transmission.

A connection procedure of the mobile station apparatus 1-1 to the base station apparatus 3-1 will be described with reference to Figs. 12 to 14. Initially, the mobile station apparatus 1-1 is connected to the base station apparatus 3-1 by acquiring system information of the base station apparatus 3-1 from the broadcast channel PBCH and performing the random access procedure from random access relevant information included in the system information. The mobile station apparatus 1-1 generates the random access preamble from the random access relevant information of the system information. The mobile station apparatus 1-1 transmits the random access preamble by using the random access channel RACH (message 1:(1)).

If the random access preamble from the mobile station apparatus 1-1 is detected, the base station apparatus 3-1 calculates the deviation amount of transmission timing between the mobile station apparatus 1-1 and the base station apparatus 3-1 from the random access preamble, performs scheduling (designation of uplink radio resource position (position of the uplink shared channel PUSCH) and the transmission format (message size)) for transmitting a Layer2(L2)/Layer3(L3) message, assigns temporary C-RNTI (cell-radio network temporary identity: mobile station apparatus identifying information), sets RA-RNTI (random access-radio network temporary identity: random access response identifying information) indicating a response (random access response) addressed to the mobile station apparatus 1-1 which has transmitted the random access preamble of the random access channel RACH in the downlink control channel PDCCH, and transmits a random access response message including the transmission timing information, the scheduling information, the temporary C-RNTI and the information of the received random access preamble to the downlink shared channel PDSCH (message 2:(2)).

If it is detected that the RA-RNTI is present in the downlink control channel PDCCH, the mobile station apparatus 1-1 checks the details of the random access response message set in the downlink shared channel PDSCH, and adjusts the uplink transmission timing from the transmission timing information in a case where information regarding the transmitted random access preamble is included, and transmits a L2/L3 message including information for identifying the mobile station apparatus 1-1, such as the C-RNTI (or temporary C-RNTI) or IMSI (international mobile subscriber identity) in the scheduled radio resource and transmission format (message 3:(3)).

In a case where the transmission timing is adjusted, the mobile station apparatus 1-1 starts a transmission timing timer in which the adjusted transmission timing is valid. If the transmission timing timer expires, the adjusted transmission timing is invalid. The mobile station apparatus 1-1 can transmit data to the base station apparatus 3-1 for a period of time during which the transmission timing is valid, and can transmit only the random access preamble in a case where the transmission timing is invalid. The period of time during which the transmission timing is valid is referred to as an uplink synchronization state, and the period of time during which the transmission timing is not valid is referred to as an uplink non-synchronization state.

If the L2/L3 message from the mobile station apparatus 1-1 is received, the base station apparatus 3-1 transmits a collision check (contention resolution) message for determining whether or not collision occurs between the mobile station apparatuses 1-1 to 1-3 by using the IMSI or the C-RNTI (or temporary C-RNTI) included in the received L2/L3 message, to the mobile station apparatus 1-1 (message 4:(4)).

In a case where the random access response message including the preamble number corresponding to the random access preamble transmitted for a predetermined period of time is not detected, a case where the transmission of the message 3 fails, or a case where the identification information of the mobile station apparatus 1-1 is not detected from the collision check message for a predetermined period of time, the mobile station apparatus 1-1 performs the procedure from the transmission (message 1:(1)) of the random access preamble again.

In a case where the number of times the random access preamble is transmitted exceeds the maximum number of times the random access preamble is transmitted indicated by the system information, the mobile station apparatus 1-1 determines that the random access has failed, and determines to communicate with the base station apparatus 3-1. After the random access procedure succeeds, control data for connection between the base station apparatus 3-1 and the mobile station apparatus 1-1 is transmitted and received. In this case, the base station apparatus 3-1 notifies the mobile station apparatus 1-1 of the assignment information of the uplink control channel PUCCH or the uplink reference signal individually assigned.

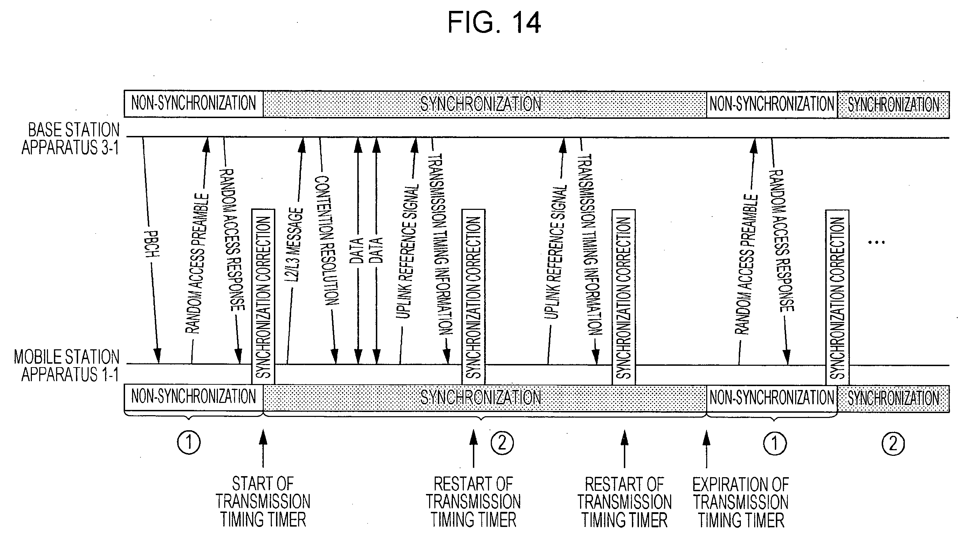

As shown in Fig. 14, the uplink transmission timing after the random access procedure has completed is updated by the base station apparatus 3-1 measures the uplink reference signal (sounding reference signal or a demodulation reference signal) transmitted from the mobile station apparatus 1-1, calculates the transmission timing, and notifies the mobile station apparatus 1-1 of the transmission timing message including the calculated transmission timing information.

If the transmission timing indicated by the transmission timing message notified from the base station apparatus 3-1 is updated, the mobile station apparatus 1-1 restarts the transmission timing timer. Both the base station apparatus 3-1 and the mobile station apparatus 1-1 hold the same transmission timing timer, and start or restart the transmission timing timer in a case where the transmission timing information is transmitted. By doing this, the base station apparatus 3-1 and the mobile station apparatus 1-1 manage the uplink synchronization state. In a case where the transmission timing timer expires, or a case where the transmission timing timer is not running, the transmission timing is invalid.

In the 3GPP, Advanced-EUTRA which is further evolution of EUTRA has been discussed. In the Advanced-EUTRA, it is assumed that communication is performed at a maximum transmission rate of I Gbps or more in the downlink and at a transmission rate of 500 Mbps or more in the uplink by using a band up to a maximum bandwidth of 100 MHz in the uplink and the downlink.

In the Advanced-EUTRA, it is considered that a maximum bandwidth of 100 MHz is achieved by binding a plurality of bands of 20 MHz or less in the EUTRA such that the mobile station apparatus of the EUTRA can be accommodated. In the Advanced-EUTRA, one band of 20 MHz or less in the EUTRA is called a component carrier (CC) (NPL 1).

One cell is constructed by binding one downlink component carrier and one uplink component carrier. One cell may be constructed by only one downlink component carrier. By binding a plurality of cells, the base station apparatus and the mobile station apparatus performing communication through the plurality of cells is referred to as carrier aggregation.

One base station apparatus assigns a plurality of cells satisfying the communication capability and communication condition of the mobile station apparatus, and communicates with the mobile station apparatus through the plurality of assigned cells. Among the plurality of cells assigned to the mobile station apparatus, one cell is classified as a first cell (primary cell: PCell), and other cells are classified as second cells (secondary cell: SCell). A special function such as the assignment of the physical uplink control channel PUCCH is configured on the first cell.

In order to reduce the power consumption of the mobile station apparatus, the mobile station apparatus does not perform a downlink reception process on the immediately assigned second cells (or does not follow radio resource assignment information indicated by the physical downlink control channel PDCCH). After the activation of the second cells is instructed from the base station apparatus, the mobile station apparatus initiates the downlink reception process on the second cells instructed to be activated (or follows the radio resource assignment information indicated by the physical downlink control channel PDCCH).

After the deactivation of the activated second cells is instructed from the base station apparatus, the mobile station apparatus stops the downlink reception process on the second cells instructed to be deactivated (or does not follow the radio resource assignment information indicated by the physical downlink control channel PDCCH). The second cells which are instructed to be activated from the base station apparatus and on which the downlink reception process is performed are referred to as activated cells, and the second cells immediately assigned to the mobile station apparatus from the base station apparatus and the second cells which are instructed to be deactivated and on which the downlink reception process is stopped are referred to as deactivated cells. The first cell is always an activated cell.

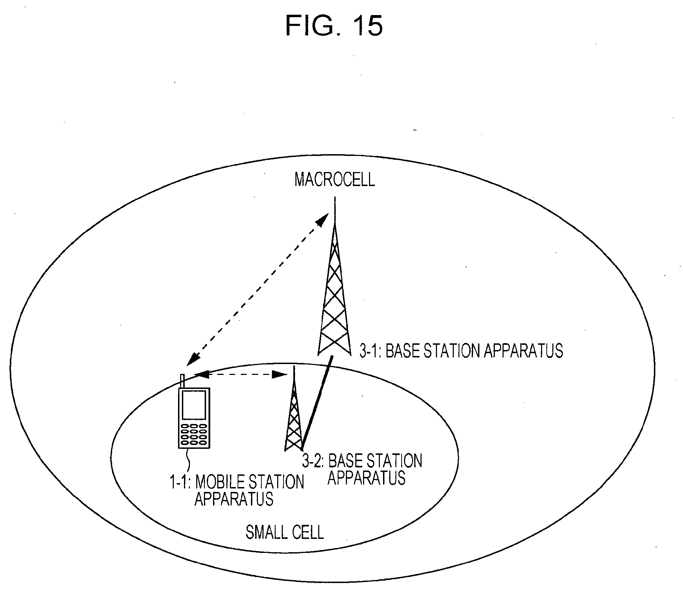

In the Advanced-EUTRA, it has been examined that the mobile station apparatus 1-1 simultaneously communicates with both the base station apparatuses, as dual connect with two base station apparatuses (the base station apparatus 3-1 and the base station apparatus 3-2), as shown in Fig. 15. The dual connect assumes that the mobile station apparatus 1-1 is connected to the base station apparatus 3-1 as the macrocell and the base station apparatus 3-2 as the small cell and the mobile station apparatus 1-1 and both the base station apparatuses perform the transmission and reception of data through the plurality of cells in a case where the base station apparatus 3-1 as a macrocell and the base station apparatus 3-2 as a small cell are not connected with a high-speed backbone line (referred to as backhaul) such as an optical fiber regarded as having no delay but a low-speed backbone line having delay (NPL 2).

Similarly to the carrier aggregation, in the dual connect, the communication is performed between the mobile station apparatus 1-1 and the base station apparatus by using the macrocell as the first cell (PCell) and the small cell as the second cell (SCell). In the dual connect, the transmission and reception of control data may be performed between the base station apparatus 3-1 as the macrocell and the mobile station apparatus 1-1, and the transmission and reception of user data may be performed between the base station apparatus 3-2 as the small cell and the mobile station apparatus 1-1. The base station apparatus that transmits and receives data may be changed based on the type of data (for example, QoS or logical channel) which is more detailed than the control data and the user data.

In the dual connect, since the base station apparatuses are connected with a low-speed line having delay, the base station apparatus 3-1 as the macrocell and the base station apparatus 3-2 as the small cell perform data scheduling of the downlink and the uplink and transmission of the downlink data independently of the mobile station apparatus 1-1 in consideration of the delay of the line between the base station apparatuses.

In a case where one or both of a transmission timing for each uplink component carrier to the base station apparatus and a reception timing for each downlink component carrier in the mobile station apparatus 1-1 are different for each cell due to the deployment of the base station apparatuses, the communication is performed by grouping cells in which the uplink transmission timings are the same. The cells in which the transmission timings are the same being grouped is referred to as a transmission timing group (timing advance group). The MAC layer of the mobile station apparatus 1-1 has a function of controlling the PHY layer in order to manage the transmission timing group.

### (Embodiment)

### [Structure Description]

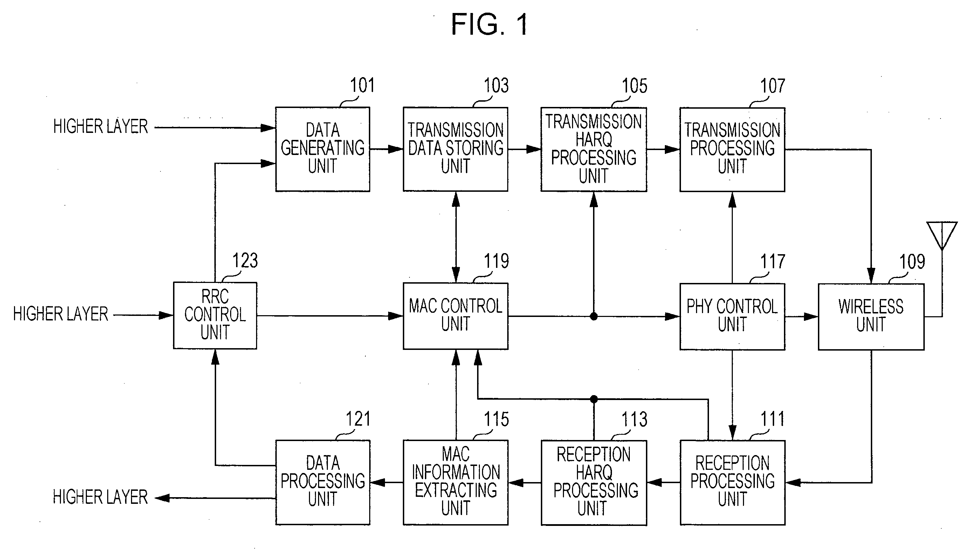

Fig. 1 is a diagram showing the structure of the mobile station apparatus according to the embodiment of the present invention. Each of the mobile station apparatuses 1-1 to 1-3 includes a data generating unit 101, a transmission data storing unit 103, a transmission HARQ processing unit 105, a transmission processing unit 107, a wireless unit 109, a reception processing unit 111, a reception HARQ processing unit 113, a MAC information extracting unit 115, a PHY control unit 117, a MAC control unit 119, a data processing unit 121, and an RRC control unit 123.

The user data from the higher layer and the control data from the RRC control unit 123 are input to the data generating unit 101. The data generating unit 101 has functions of the PDCP layer and the RLC layer. The data generating unit 101 performs the header compression of the IP packet of the user data, the ciphering of data, and processes such as the segmentation and concatenation of data, and controls the data size. The data generating unit 101 outputs the processed data to the transmission data storing unit 103.

The transmission data storing unit 103 stores the data input from the data generating unit 101, and outputs as much instructed data as the data amount instructed based on an instruction from the MAC control unit 119, to the transmission HARQ processing unit 105. The transmission data storing unit 103 outputs information of the data amount of the stored data to the MAC control unit 119.

The transmission HARQ processing unit 105 codes the input data, and performs a puncturing process on the coded data. The transmission HARQ processing unit 105 outputs the punctured data to the transmission processing unit 107, and holds the coded data. In a case where the retransmission of the data is instructed from the MAC control unit 119, the transmission HARQ processing unit 105 performs a puncturing process different from the puncturing process performed in the previous stage on the coded data which is held (is buffered), and outputs the punctured data to the transmission processing unit 107. In a case where the removal of the data is instructed from the MAC control unit 119, the transmission HARQ processing unit 105 removes the data corresponding to the designated cell.

The transmission processing unit 107 modulates and codes the data input from the transmission HARQ processing unit 105. The transmission processing unit 107 performs DFT (discrete Fourier transform) - IFFT (inverse fast Fourier transform) on the demodulated and coded data, inserts a CP (cyclic prefix) into the processed data, sets the data into which the CP has been inserted in the physical uplink shared channel (PUSCH) of each uplink component carrier (cell), and outputs the data to the wireless unit 109.

In a case where the response of the reception data is instructed from the PHY control unit 117, the transmission processing unit 107 generates an ACK signal or NACK signal, sets the generated signal in the physical uplink control channel (PUCCH), and outputs the signal to the wireless unit 109. In a case where the transmission of the random access preamble is instructed from the PHY control unit 117, the transmission processing unit 107 generates a random access preamble, sets the generated signal in the physical random access channel PRACH, and outputs the signal to the wireless unit 109.

The wireless unit 109 performs up-conversion on the data input from the transmission processing unit 107 so as to have a wireless frequency of transmission position information (transmission cell information) instructed from the PHY control unit 117, and adjusts transmission power to transmit the data through a transmission antenna. The wireless unit 109 performs down-conversion on a radio signal received by a reception antenna, and outputs the converted signal to the reception processing unit 111. The wireless unit 109 configures transmission timing information received from the PHY control unit 117, as an uplink transmission timing.

The reception processing unit 111 performs the FFT (fast Fourier transform) process, the deciphering process, and the demodulation process on the signal input from the wireless unit 109. The reception processing unit 111 demodulates the physical downlink control channel PDCCH or an enhanced physical downlink control channel EPDCCH, demodulates the physical downlink shared channel PDSCH based on the downlink assignment information in a case where the downlink assignment information of the mobile station apparatus is detected, and outputs the acquisition of the downlink assignment information to the MAC control unit 119.

The reception processing unit 111 outputs the data of the demodulated physical downlink shared channel PDSCH to the reception HARQ processing unit 113. The reception processing unit 111 demodulates the physical downlink control channel PDCCH or the enhanced physical downlink control channel EPDCCH, and outputs the acquired response information to the MAC control unit 119 in a case where the uplink transmission permission information (the uplink grant) and the response information (ACK/NACK) of the uplink transmission data are detected. The uplink transmission permission information includes data modulation and coding schemes, data size information, HARQ information, and transmission position information.

The reception HARQ processing unit 113 performs the deciphering process on the input data from the reception processing unit 111, and outputs the data to the MAC information extracting unit 115 in a case where the deciphering process succeeds. The reception HARQ processing unit 113 stores data on which the deciphering process fails in a case where the deciphering process fails on the input data. In a case where the retransmission data is received, the reception HARQ processing unit 113 combines the held data with the retransmission data, and performs the deciphering process. The reception HARQ processing unit 113 notifies the MAC control unit 119 of whether or not the deciphering process has succeeded on the input data.

The MAC information extracting unit 115 extracts the control data of the MAC layer (medium access control layer) from the data input from the reception HARQ processing unit 113, and outputs the extracted MAC control information to the MAC control unit 119. The MAC information extracting unit 115 outputs remaining data to the data processing unit 121. The data processing unit 121 has functions of the PDCP layer and the RLC layer, performs a function of decompressing (restoring) the compressed IP header, a function of deciphering the ciphered data and processes such as the segmentation and concatenation of data, and returns the data to an original type. The data processing unit 121 divides the data into the RRC message and the user data, outputs the RRC message to the RRC control unit 123, and outputs the user data to the higher layer.

The PHY control unit 117 controls the transmission processing unit 107, the wireless unit 109 and the reception processing unit 111 in response to the instruction from the MAC control unit 119. The PHY control unit 117 notifies the transmission processing unit 107 of the modulation and coding schemes and the transmission position from the modulation and coding schemes, the transmission information and the transmission position information (transmission cell information) notified from the MAC control unit 119, and notifies the wireless unit 109 of transmission power information and frequency information of the transmission cell. The PHY control unit 117 performs ON/OFF control of power (power supply) on the transmission processing unit 107, the wireless unit 109 and the reception processing unit 111 in response to the instruction of the MAC control unit 119. The ON/OFF control indicates power saving control including the reduction of the power supply up to standby power.

The MAC control unit 119 has a function of the MAC layer, and controls the MAC layer based on the information acquired from the RRC control unit 123 or the lower layer. The MAC control unit 119 determines a data transmission destination and a data transmission priority based on data transmission control configuration designated from the RRC control unit 123 and data amount information acquired from the transmission data storing unit 103 and uplink transmission permission information acquired from the reception processing unit 111, and notifies the transmission data storing unit 103 of information regarding the data to be transmitted. The MAC control unit 119 notifies the transmission HARQ processing unit 105 of HARQ information, and outputs modulation and cording schemes and transmission position information (transmission cell information) to the PHY control unit 117.

The MAC control unit 119 acquires response information to the uplink transmission data from the reception processing unit 111, and instructs the transmission HARQ processing unit 105 and the PHY control unit 117 to perform the retransmission in a case where the response information indicates NACK (negative acknowledge). In a case where information of whether or not the deciphering process has succeeded on the data from the reception HARQ processing unit 113, the MAC control unit 119 instructs the PHY control unit 117 to transmit an ACK signal or a NACK signal.

In a case where the discontinuous reception (DRX) control information and the activation/deactivation instruction information of the cell (or component carrier) of the MAC control information input from the MAC information extracting unit 115 are acquired, the MAC control unit 119 controls the PHY control unit 117 in order to operation start/operation stop control of the wireless unit 109, the transmission processing unit 107 and the reception processing unit 111 in order to perform the activation/deactivation control and discontinuous reception control.

The MAC control unit 119 acquires transmission timing group information and transmission timing timer information from the RRC control unit 123. The MAC control unit 119 manages the validation and invalidation of the uplink transmission timing of each transmission timing group by using the transmission timing timer. The MAC control unit 119 outputs the transmission timing information included in the transmission timing message of the MAC control information input from the MAC information extracting unit 115 to the PHY control unit 117. The MAC control unit 119 starts or restarts a corresponding transmission timing timer in a case where the transmission timing is configured for each cell or each transmission timing group.

In a case where the transmission timing timer expires in the dual connect, the MAC control unit 119 instructs the transmission HARQ processing unit 105 to remove the held data for the cell of the transmission timing group in which the transmission timing timer expires. The MAC control unit 119 notifies the RRC control unit 123 that the radio resources of the physical uplink control channel PUCCH and the uplink sounding reference signal assigned to the cell of the transmission timing group in which the transmission timing timer expires are to be released. The MAC control unit 119 discards the uplink transmission permission information for the cell of the transmission timing group in which the transmission timing timer expires.

In a case where the transmission timing timer expires during non-dual connect and the transmission timing timer of the transmission timing group including the first cell expires, the MAC control unit 119 instructs the transmission HARQ processing unit 105 to remove the held data for all the cells. The MAC control unit 119 notifies the RRC control unit 123 that the radio resources of the uplink sounding reference signals of all the cells and the physical uplink control channel PUCCH of the first cell are to be released. The MAC control unit 119 discards the uplink transmission permission information for all the cells.

In a case where the transmission timing timer expires during non-dual connect and the transmission timing timer of the transmission timing group that does not include the first cell expires, the MAC control unit 119 notifies the RRC control unit 123 that the radio resources of the uplink sounding reference signals assigned to the cells of the transmission timing group in which the transmission timing timer expires are to be released. The MAC control unit 119 discards the uplink transmission permission information for the cells of the transmission timing group in which the transmission timing timer expires.

The MAC control unit 119 creates a buffer status report (BSR) which is data amount information stored in the transmission data storing unit 103, and outputs the created report to the transmission data storing unit 103. The MAC control unit 119 creates a power headroom report (PHR) which is transmission power information for each cell, and outputs the created report to the transmission data storing unit 103.

The RRC control unit 123 performs connection and disconnection processes with respect to the base station apparatus 3-1, and various configurations for communicating with the base station apparatus 3-1, and the base station apparatus 3-2 such as carrier aggregation configuration (adding and removing of the cell), configuration of dual connect and data transmission control configuration of the control data and the user data. The RRC control unit 123 transmits and receives information to and from the higher layer according to various configurations, and controls the lower layer according to the various configurations.

The RRC control unit 123 creates the RRC message, and outputs the created RRC message to the data generating unit 101. The RRC control unit 123 analyzes the RRC message input from the data processing unit 121. The RRC control unit 123 creates the message indicating the transmission capability of the mobile station apparatus, and outputs the created message to the data generating unit 101. The RRC control unit 123 outputs information necessary for the MAC layer to the MAC control unit 119, and outputs information necessary for the physical layer to the PHY control unit 117.

In a case where the transmission timing timer information and the transmission timing group information of each cell are acquired in the carrier aggregation configuration, the RRC control unit 123 outputs the transmission timing timer information and the transmission timing group information of each cell to the MAC control unit 119. In a case where it is recognized that the mobile station apparatus communicates with the base station apparatus 3-1 and the base station apparatus 3-2 through the dual connect, the RRC control unit 123 notifies the MAC control unit 119 that the mobile station apparatus is in a dual connect state. In a case where the releasing of the physical uplink control channel PUCCH or the uplink sounding reference signal is notified from the MAC control unit 119, the RRC control unit 123 releases the assigned physical uplink control channel PUCCH and uplink sounding reference signal, and instructs the PHY control unit 117 to release the physical uplink control channel PUCCH and the uplink sounding reference signal.

The transmission processing unit 107, the wireless unit 109, the reception processing unit 111 and the PHY control unit 117 perform the operation of the physical layer, the transmission data storing unit 103, the transmission HARQ processing unit 105, the reception HARQ processing unit 113, the MAC information extracting unit 115 and the MAC control unit 119 perform the operation of the MAC layer, the data generating unit 101 and the data processing unit 121 perform the operations of the RLC layer and the PDCP layer, and the RRC control unit 123 performs the operation of the RRC layer.

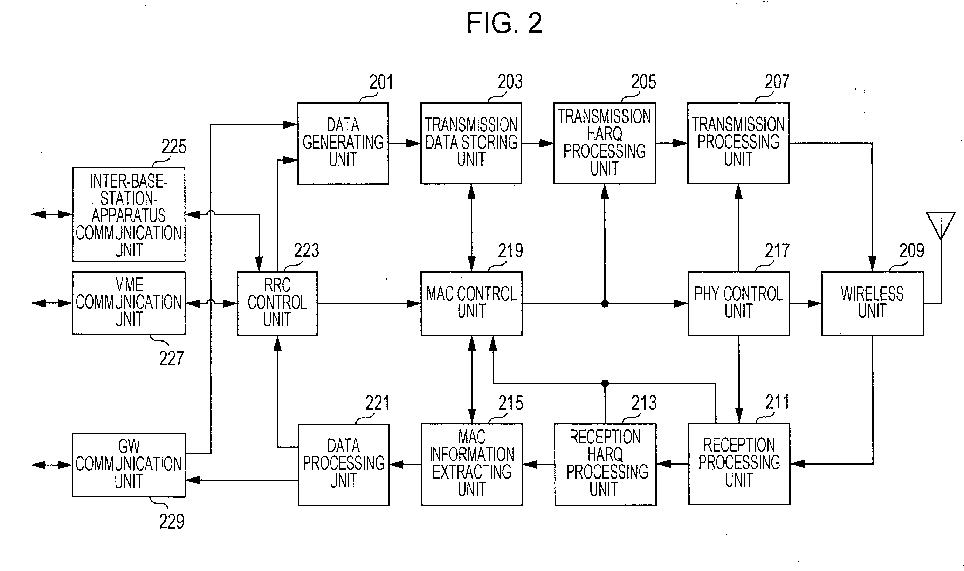

Fig. 2 is a diagram showing the structure of the base station apparatus according to the embodiment of the present invention. The base station apparatus 3-1 or the base station apparatus 3-2 includes a data generating unit 201, a transmission data storing unit 203, a transmission HARQ processing unit 205, a transmission processing unit 207, a wireless unit 209, a reception processing unit 211, a reception HARQ processing unit 213, a MAC information extracting unit 215, a PHY control unit 217, a MAC control unit 219, a data processing unit 221, an RRC control unit 223, an inter-base-station-apparatus communication unit 225, a MME communication unit 227, and a GW communication unit 229.

The user data from the GW communication unit 229 and the control data from the RRC control 223 are input to the data generating unit 201. The data generating unit 201 has functions of the PDCP layer and the RLC layer, compresses the header of the IP packet of the user data and ciphers the data, performs processes such as the segmentation and concatenation of the data, and adjusts the data size. The data generating unit 201 outputs the processed data and the logical channel information of the data to the transmission data storing unit 203.

The transmission data storing unit 203 stores the data input from the data generating unit 201 for each user, and outputs as much the data of the user instructed based on the instruction from the MAC control unit 219 as the instructed data amount to the transmission HARQ processing unit 205. The transmission data storing unit 203 outputs information of the data amount of the stored data to the MAC control unit 219.

The transmission HARQ processing unit 205 codes the input data, and performs a puncturing process on the coded data. The transmission HARQ processing unit 205 outputs the punctured data to the transmission processing unit 207, and holds the coded data. In a case where the retransmission of the data is instructed from the MAC control unit 219, the transmission HARQ processing unit 205 performs a puncturing process different from the puncturing process performed in the previous stage on the coded data being held, and outputs the punctured data to the transmission processing unit 207.

The transmission processing unit 207 modulates and codes the data input from the transmission HARQ processing unit 205. The transmission processing unit 207 maps the modulated and coded data to each channel and signal such as the physical downlink control channel PDCCH, downlink synchronization signal, the physical broadcast channel PBCH and the physical downlink shared channel PDSCH of each cell, performs serial/parallel conversion, IFFT (inverse fast Fourier transform) and OFDM signal processing such as CP insertion on the mapped data, and generates OFDM signals.

The transmission processing unit 207 outputs the generated OFDM signals to the wireless unit 209. In a case where the response of the reception data is instructed from the MAC control unit 219, the transmission processing unit 207 generates the ACK or NACK signal, sets the generated signal in the physical downlink control channel PDCCH, and outputs the signal to the wireless unit 209.

The wireless unit 209 performs up-conversion on the data input from the transmission processing unit 207 to have a wireless frequency, and adjusts transmission power to transmit the data from a transmission antenna. The wireless unit 209 performs down-conversion on the radio signal received by a reception antenna, and outputs the signal to the reception processing unit 211. The reception processing unit 211 performs an FFT (fast Fourier transform) process, a deciphering process and a demodulation process son the signal input from the wireless unit 209.

The reception processing unit 211 outputs the data of the physical uplink shared channel PUSCH of the demodulated data to the reception HARQ processing unit 213. The reception processing unit 211 outputs response information (ACK/NACK), downlink radio quality information (CQI) and uplink transmission request information (scheduling request) of the downlink transmission data of the control data acquired from the physical uplink control channel PUCCH of the demodulated data to the MAC control unit 219.

In a case where the random access preamble is detected, the reception processing unit 211 calculates the transmission timing from the detected random access preamble, and outputs a number of the detected random access preamble and the calculated transmission timing to the MAC control unit 219. The reception processing unit 211 calculates the transmission timing from the uplink reference signal, and outputs the calculated transmission timing to the MAC control unit 219.

The reception HARQ processing unit 213 performs the deciphering process on the input data from the reception processing unit 211, and outputs the data to the MAC information extracting unit 215 in a case where the deciphering process succeeds. In a case where the deciphering process fails on the input data, the reception HARQ processing unit 213 holds the data on which the deciphering process fails. In a case where the retransmission data is received, the reception HARQ processing unit 213 combines the held data with the retransmission data, and performs the deciphering process. The reception HARQ processing unit 213 notifies the MAC control unit 219 of whether or not the deciphering process has succeeded on the input data. In a case where the removing of the data is instructed from the MAC control unit 219, the reception HARQ processing unit 213 removes the data corresponding to the designated cell.

The MAC information extracting unit 215 extracts the control data of the MAC layer from the data input from the reception HARQ processing unit 213, and outputs the extracted control information to the MAC control unit 219. The MAC information extracting unit 215 outputs the remaining data to the data processing unit 221. The data processing unit 221 has functions of the PDCP layer and the RLC layer, performs a function of decompressing (restoring) the compressed IP header or a deciphering function of the ciphered data and processes such as the segmentation and concatenation of the data, and returns the data to the original type. The data processing unit 221 divides the data into the RRC message and the user data, outputs the RRC message to the RRC control unit 223, and outputs the user data to the higher layer.

The MAC control unit 219 has the function of the MAC layer, and controls the MAC layer based on the information acquired from the RRC control unit 223 or the higher layer. The MAC control unit 219 performs the scheduling process of the downlink and the uplink. The MAC control unit 219 performs the scheduling process of the downlink and the uplink from a reception operation state of the mobile station apparatus 1-1, the data amount information for each user acquired from the transmission data storing unit 203, the control information input from the MAC information extracting unit 215, and response information (ACK/NACK), downlink radio quality information (CQI) and uplink transmission request information (scheduling request) of the downlink transmission data input from the reception processing unit 211. The MAC control unit 219 outputs the scheduling result to the transmission processing unit 207.

The MAC control unit 219 acquires the response information to the uplink transmission data from the reception processing unit 211, and instructs the transmission HARQ processing unit 205 and the transmission processing unit 207 to perform retransmission in a case where the response information indicates the NACK (negative acknowledge). In a case where the information about whether or not the deciphering process of the data succeeds is acquired from the reception HARQ processing unit 213, the MAC control unit 219 instructs the transmission processing unit 207 to transmit the ACK or NACK signal.

The MAC control unit 219 performs the activation/deactivation process of the cell (or the component carrier) assigned to the mobile station apparatus 1-1 and the management of the uplink transmission timing. The MAC control unit determines a reception operation state of the mobile station apparatus 1-1 from a discontinuous reception parameter acquired from the RRC control unit 223.

In a case where the random access preamble number and the transmission timing are acquired from the reception processing unit 211, the MAC control unit 219 crates the random access response message, and outputs the random access response message to the transmission data storing unit 203. In a case where the transmission timing is acquired from the reception processing unit 211, the MAC control unit 219 creates the transmission timing message including the transmission timing, and outputs the transmission timing message to the transmission data storing unit 203.

The MAC control unit 219 manages the uplink transmission timing of the transmission timing group of the mobile station apparatus 1-1 by using the transmission timing timer. In a case where the transmission timing message of each transmission timing group is transmitted to the mobile station apparatus 1-1, the MAC control unit 219 starts or restarts the corresponding transmission timing timer.

In a case where the transmission timing timer expires in the dual connect, the MAC control unit 219 instructs the reception HARQ processing unit 213 to remove the held data for the cells of the transmission timing group in which the transmission timing timer expires. The MAC control unit 219 notifies the RRC control unit 223 that the radio resources of the uplink sounding reference signal and the physical uplink control channel PUCCH assigned to the mobile station apparatus 1-1 for the cells of the transmission timing group in which the transmission timing timer expires are to be released. The MAC control unit 219 stops the scheduling of the uplink data for the cells of the transmission timing group in which the transmission timing timer expires.

In a case where the transmission timing timer of the transmission timing group including the first cell expires in the mobile station apparatus 1-1 that does not operate the dual connect, the MAC control unit 219 instructs the reception HARQ processing unit 213 to remove the held data for all the cells assigned to the mobile station apparatus 1-1. The MAC control unit 219 notifies the RRC control unit 223 that the radio resources of the uplink sounding reference signals of all the cells and the physical uplink control channel PUCCH assigned to the mobile station apparatus 1-1 are to be released. The MAC control unit 219 stops the scheduling of the uplink data for all the cells with respect to the mobile station apparatus 1-1.

In a case where the transmission timing timer of the transmission timing group that does not include the first cell expires in the mobile station apparatus 1-1 that does not operate the dual connect, the MAC control unit 219 instructs the reception HARQ processing unit 213 to remove the held data for the cells of the transmission timing group in which the transmission timing timer assigned to the mobile station apparatus 1-1 expires. The MAC control unit 219 notifies the RRC control unit 223 that the radio resources of the uplink sounding reference signals assigned to the mobile station apparatus 1-1 for the cells of the transmission timing group in which the transmission timing timer expires are to be released. The MAC control unit 219 stops the scheduling of the uplink data for the cells of the transmission timing group in which the transmission timing timer expires with respect to the mobile station apparatus 1-1.

The RRC control unit 223 performs the connection and disconnection processes with respect to the mobile station apparatus 1-1, and various configurations for communicating with the mobile station apparatus 1-1 such as the carrier aggregation configuration (adding and removing of the cell), the configuration of the dual connect and the data transmission control configuration indicating the cell in which the user data and the control data of the mobile station apparatus 1-1 are transmitted and received, transmits and receives information to and from the higher layer according to the various configurations, and controls the lower layer according to the various configurations.

The RRC control unit 223 creates various RRC messages, and outputs the created RRC messages to the data generating unit 201. The RRC control unit 223 analyzes the RRC message input from the data processing unit 221. In a case where a message indicating the transmission and reception capability of the mobile station apparatus is acquired from the mobile station apparatus 1-1, the RRC control unit 223 performs the configuration of the carrier aggregation or the configuration of the dual connect appropriate from the mobile station apparatus 1-1 based on the transmission and reception capability information of the mobile station apparatus.

The RRC control unit 223 outputs information necessary for the MAC layer to the MAC control unit 219, and outputs information necessary for the physical layer to the PHY control unit 217. In a case where the handover or the dual connect is operated, the RRC control unit 223 notifies the inter-base-station-apparatus communication unit 225 and the MME communication unit 227 of the necessary information. In a case where a dual connect request message is received, the RRC control unit 223 notifies the inter-base-station-apparatus communication unit 225 of the transmission timing timer information and the transmission timing group information applied to the mobile station apparatus 1-1. In a case where the releasing of the uplink sounding reference signal or the physical uplink control channel PUCCH is notified from the MAC control unit 219, the RRC control unit 223 releases the assigned uplink sounding reference signal and physical uplink control channel PUCCH, and instructs the PHY control unit 217 to release the uplink sounding reference signal and the physical uplink control channel PUCCH.

The inter-base-station-apparatus communication unit 225 communicates with another base station apparatus, and transmits a control message between the base station apparatuses, which is input from the RRC control unit 223, to another base station apparatus. The inter-base-station-apparatus communication unit 225 receives the control message between the base station apparatuses from another base station apparatus, and outputs the received control message to the RRC control unit 223. The control message between the base station apparatuses includes a control message related to the handover and a control message related to the dual connect.

The MME communication unit 227 communicates with an MME (mobility management entity), and transmits a control message between the base station apparatus and the MME, which is input from the RRC control unit 223, to the MME. The MME communication unit 227 receives the control message between the base station apparatus and the MME from the MME, and outputs the received control message to the RRC control unit 223. The control message between the base station apparatus and the MME includes a path switch request message and a path switch request response message.

The inter-GW communication unit 229 communicates with the GW, receives the user data of the mobile station apparatus which is sent from the GW, and outputs the received data to the data generating unit 201. The inter-GW communication unit 229 transmits the user data of the mobile station apparatus which is input from the data processing unit 221.

The transmission processing unit 207, the wireless unit 209 and the reception processing unit 211 perform the operation of the PHY layer, the transmission data storing unit 203, the transmission HARQ processing unit 205, the reception HARQ processing unit 213, the MAC information extracting unit 215 and the MAC control unit 219 perform the operation of the MAC layer, the data generating unit 201 and the data processing unit 221 perform the operations of the RLC layer and the PDCP layer, and the RRC control unit 223 performs the operation of the RRC layer.

### [Operation Description]

The wireless communication system described with reference to Figs. 7 to 15 is assumed. As shown in Fig. 7, the base station apparatus 3-1 communicates with the plurality of mobile station apparatuses 1-1, 1-2 and 1-3. The wireless communication system in which the base station apparatus 3-1 as the macrocell and the base station apparatus 3-2 as the small cell communicate with the mobile station apparatus 1-1 through the plurality of cells shown in Fig. 15 is assumed.

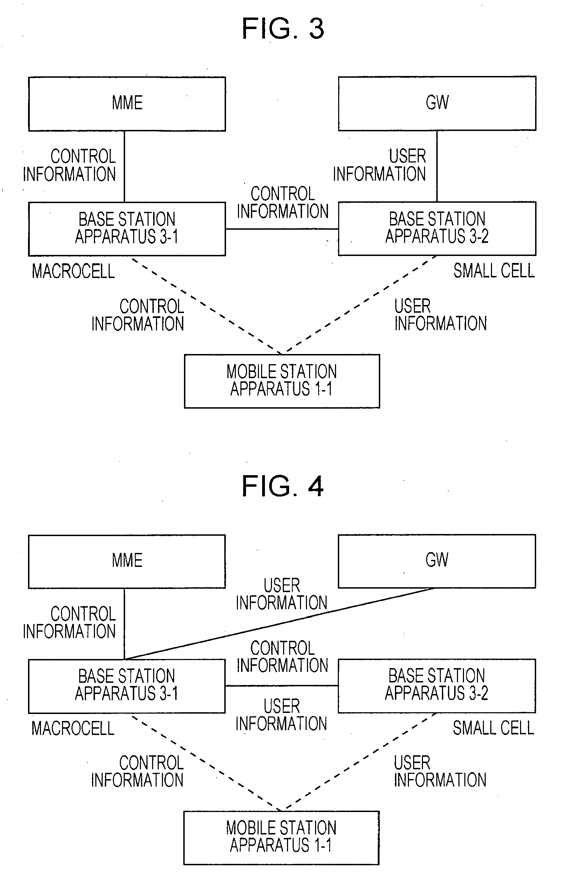

The mobile station apparatus 1-1 shown in Figs. 3 and 4 is connected to the base station apparatus 3-1 and the base station apparatus 3-2 through the dual connect. The control information is transmitted and received between the base station apparatus 3-1 as the macrocell and the mobile station apparatus 1-1. The user information is transmitted and received between the base station apparatus 3-2 as the small cell and the mobile station apparatus 1-1.

As shown in Fig. 3, the mobile station apparatus 1-1 is connected to the base station apparatus 3-1 and the base station apparatus 3-2 through the dual connect. At least the control information (control-plane information) of the mobile station apparatus 1-1 is transmitted and received between the base station apparatus 3-1 as the macrocell and the MME (mobility management entity). At least the user information (user-plane information) of the mobile station apparatus 1-1 is transmitted and received between the base station apparatus 3-2 as the small cell and the GW (gateway). The control information for controlling the mobile station apparatus 1-1 is transmitted and received between the base station apparatus 3-1 as the macrocell and the base station apparatus 3-2 as the small cell.

In the dual connect shown in Fig. 4, at least the control information (control-plane information) of the mobile station apparatus 1-1 is transmitted and received between the base station apparatus 3-1 as the macrocell and the MME (mobility management entity). At least the user information (user-plane information) of the mobile station apparatus 1-1 is transmitted and received between the base station apparatus 3-1 as the macrocell and the GW (gateway).

The base station apparatus 3-1 as the macrocell transports the user information received from the GW to the base station apparatus 3-2 as the small cell. The base station apparatus 3-2 as the small cell transports the user information received from the mobile station apparatus 1-1 to the base station apparatus 3-1. The control information for controlling the mobile station apparatus 1-1 is transmitted and received between the base station apparatus 3-1 as the macrocell and the base station apparatus 3-2 as the small cell.

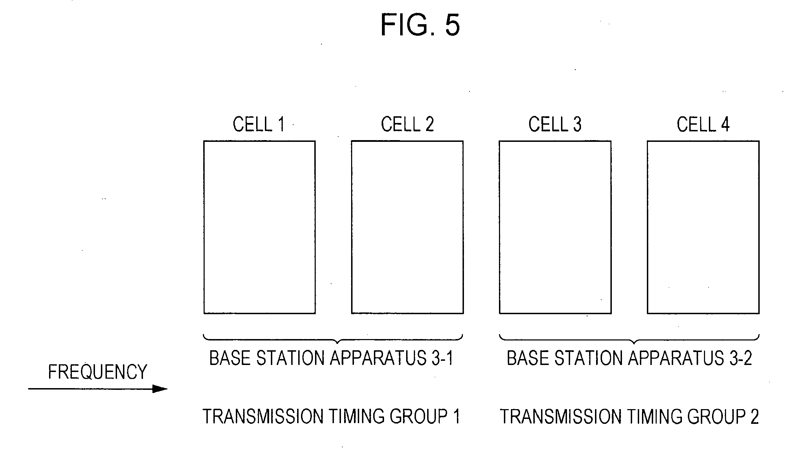

The operations of the mobile station apparatus 1-1, the base station apparatus 3-1 and the base station apparatus 3-2 will be described. For example, the base station apparatus 3-1 provides a cell 1 and a cell 2 as shown in Fig. 5, and the base station apparatus 3-2 provides a cell 3 and a cell 4. The cells 1 and 2 are a transmission timing group (transmission timing group 1) having the same transmission timing, and the cells 3 and 4 are a transmission timing group (transmission timing group 2) having the same transmission timing different from that of the cells 1 and 2. It is assumed that the cell 1 is configured as the first cell and the cells 2, 3 and 4 are configured as the second cells.

The mobile station apparatus 1-1 performs cell search, and finds one cell of the base station apparatus 3-1. Here, it is assumed that the mobile station apparatus 1-1 finds one cell. The mobile station apparatus 1-1 receives the physical broadcast channel PBCH of the cell 1, and acquires the system information (the physical channel configuration of the cell, the transmission power information, the information related to the random access procedure, and the transmission timing timer information). The mobile station apparatus 1-1 transmits the random access preamble to the physical random access channel RACH of the cell 1 in order to perform the initial access by using the information related to the random access procedure included in the system information.

The mobile station apparatus 1-1 acquires the random access response message including the transmission timing information for the cell 1 from the base station apparatus 3-1, configures the transmission timing information as the uplink transmission timing of the cell 1, and starts the transmission timing timer (hereinafter, referred to as a transmission timing timer 1) designated by the system information of the cell 1. The mobile station apparatus 1-1 transmits the message 3 to the base station apparatus 3-1 through the cell 1. The mobile station apparatus 1-1 transmits the message 3 by adding the details indicating the initial access to the message 3. If the contention resolution is received from the base station apparatus 3-1, the mobile station apparatus 1-1 ends the random access procedure.

In a case where it is determined to allow the base station apparatus 3-2 to communicate with the mobile station apparatus 1-1 through the dual connect based on the measured result of the surrounding cell from the mobile station apparatus 1-1, the base station apparatus 3-1 transmits the dual connect request message to the base station apparatus 3-2. If the dual connect request message is received, the base station apparatus 3-2 transmits the dual connect request response message to the base station apparatus 3-1. The dual connect request response message includes the system information of the cell (the cell 3 and the cell 4) of the base station apparatus 3-2 and the information configured for the mobile station apparatus 1-1 by the base station apparatus 3-2.

The information configured for the mobile station apparatus 1-1 by the base station apparatus 3-2 includes the physical resource information (the physical uplink control channel PUCCH and the uplink reference signal) used by the mobile station apparatus 1-1 in the cell (the cell 3 and the cell 4) to be used, the transmission timing group information and the transmission timing timer information for the transmission timing group.

The base station apparatus 3-1 transmits the cell configuration message for indicating the carrier aggregation to the mobile station apparatus 1-1. The cell configuration message includes the system information of the cell (the cell 2, the cell 3 and the cell 4) to be used, the physical resource information (the physical uplink control channel PUCCH and the uplink reference signal) used by the mobile station apparatus 1-1 in the cell to be used, the transmission timing group information, the transmission timing timer information of the transmission timing group, the data control information indicating the cell in which the control data or the use data is transmitted, and the information indicating whether or not the communication is performed through the dual connect. If the cell configuration message is received from the base station apparatus 3-1, the mobile station apparatus 1-1 configures the cells indicated by the cell configuration message. The mobile station apparatus 1-1 configures the transmission timing group.

The information indicating whether or not the communication is performed through the dual connect may be 1-bit information indicating whether or not the communication is performed through the dual connect. In a case whether the physical uplink control channel PUCCH is included in the physical resource information, the mobile station apparatus 1-1 may determine that the apparatuses are in the dual connect state. In a case where the control data and the user data are instructed to be transmitted in different cells, the mobile station apparatus 1-1 may determine that the apparatuses are in the dual connect state. The cell configuration message indicating the dual connect may be separately prepared, and the base station apparatus 3-1 may appropriately use the message depending on whether or not the communication is performed through the dual connect.

The base station apparatus 3-1 transmits the activation instruction message indicating the activation of the cell 2, the cell 3 and the cell 4 to the mobile station apparatus 1-1. If the activation instruction message is received, the mobile station apparatus 1-1 starts the downlink reception process in the cell 2, the cell 3 and the cell 4. The base station apparatus 3-2 transmits the random access instruction message to the cell 3. If the random access instruction message is received, the mobile station apparatus 1-1 performs the random access procedure in the cell 3.

The mobile station apparatus 1-1 transmits the random access preamble designated by the random access instruction message by using the physical random access channel PRACH of the cell 3. The mobile station apparatus 1-1 monitors the physical downlink control channel PDCCH, and receives the random access response message if the random access response identification information is acquired.

If the random access response message is acquired, the mobile station apparatus 1-1 applies the transmission timing information included in the random access response message, as the transmission timing of the transmission timing group (the transmission timing group 2) including the cell 3. That is, the mobile station apparatus 1-1 applies the transmission timing information, as the uplink transmission timings of the cell 3 and the cell 4. The mobile station apparatus 1-1 starts the transmission timing timer (hereinafter, referred to as a transmission timing timer 2) of the transmission timing group (transmission timing group 2) including the cell 3 in which the random access preamble is transmitted. The mobile station apparatus 1-1 ends the random access procedure.

The mobile station apparatus 1-1 configures the transmission timing of the cell 1, as the transmission timing of the cell 2 at the time of configuring the transmission timing group by configuring the transmission timing group 1 (the cell 1 and the cell 2) by the cell configuration message.

The base station apparatus 3-1 or the base station apparatus 3-2 measures the uplink reference signal from the mobile station apparatus 1-1, and calculates the transmission timing information. The base station apparatus 3-1 or the base station apparatus 3-2 transmits the transmission timing information of each transmission timing group to the mobile station apparatus 1-1 for a period of time during which each transmission timing timer is running. If the transmission timing information of the transmission timing group is received, the mobile station apparatus 1-1 applies the transmission timing information, as the uplink transmission timing of the designated transmission timing group, and restarts the transmission timing timer corresponding to the transmission timing group.

The mobile station apparatus 1-1 can perform the uplink transmission in the uplink of the cell of the transmission timing group which is a target in a state of the uplink is synchronized (the transmission timing is valid) for the period of time during which the transmission timing timer is running.

In a case where the base station apparatus holds the same transmission timing timer as that of the mobile station apparatus 1-1 and transmits the transmission timing information, or in a case where the base station apparatus transmits the transmission timing information and receives the acknowledge (ACK) for the transmission timing information from the mobile station apparatus 1-1, the base station apparatus 3-1 or the base station apparatus 3-2 restarts the transmission timing timer.

In a case where the transmission timing timer of each transmission timing group expires and the apparatus is in the dual connect state by the information indicating whether or not the communication is performed through the dual connect, the mobile station apparatus 1-1 inhibits the uplink transmission other than the random access preamble transmission with respect to the cells of the transmission timing group in which the transmission timing timer expires. The mobile station apparatus 1-1 removes the data held in the transmission HARQ storing unit 109 (hereinafter, referred to as a transmission HARQ buffer) for the transmission timing group in which the transmission timing timer expires (or flashes the transmission HARQ buffer corresponding to the transmission timing group in which the transmission timing timer expires).

The mobile station apparatus 1-1 releases the radio resources of the sounding reference signals and the radio resources of the uplink control channels PUCCHs assigned to the cells of the transmission timing group in which the transmission timing timer expires. In a case where the uplink transmission permission information is acquired from the cells of the transmission timing group in which the transmission timing timer expires, the mobile station apparatus 1-1 discards the uplink transmission permission information of the uplink shared channel PUSCH. The mobile station apparatus 1-1 may discard the assignment information of the downlink shared channel PDSCH.

For example, in a case where the transmission timing timer 2 expires, the mobile station apparatus 1-1 does not perform the uplink transmission other than the random access preamble transmission with respect to the cell 3 and the cell 4 belonging to the transmission timing group 2. The mobile station apparatus 1-1 removes the data of the transmission HARQ buffer corresponding to the cell 3 and the cell 4 of the transmission timing group 2.

The mobile station apparatus 1-1 releases the radio resources of the uplink control channel PUCCH assigned to the cells (the cell 3 and the cell 4) of the transmission timing group 2. In a case where the uplink transmission permission information for the cell 3 and the cell 4 of the transmission timing group 2 is acquired, the mobile station apparatus 1-1 discards the transmission permission information of the uplink shred channel PUSCH.

Similarly, in a case where the transmission timing timer 1 expires, the mobile station apparatus 1-1 performs the same process without performing the uplink transmission other than the random access preamble transmission with respect to the cell 1 and the cell 2 of the transmission timing group 1. That is, in the case of the dual connect, the mobile station apparatus 1-1 performs control related to the transmission timing group for each base station apparatus.

In a case where each transmission timing timer expires, the base station apparatus 3-1 or the base station apparatus 3-2 stops the assignment process of the uplink shared PUSCH channel with respect to the cells of the transmission timing group in which the transmission timing timer expires, and removes the data held in the reception HARQ storing unit 221 (hereinafter, referred to as a reception HARQ buffer). The base station apparatus 3-1 or the base station apparatus 3-2 releases the radio resources of the sounding reference signals and the resources of the uplink control channels PUCCHs assigned to the cells of the transmission timing group in which the transmission timing timer expires with respect to the mobile station apparatus 1-1.

In a case where the base station apparatus 3-1 provides the cell 1, the cell 2, the cell 3 and the cell 4 and configures in the mobile station apparatus 1-1 the transmission timing group 1 (the cell 1 and the cell 2) and the transmission timing group 2 (the cell 3 and the cell 4) in the non-dual connect, and also in a case where the transmission timing timer (the transmission timing timer 1) of the transmission timing group (the transmission timing group) including the first cell (the cell 1) expires, the mobile station apparatus 1-1 stops the transmission timing timer (the transmission timing timer 2) of another transmission timing group (the transmission timing group 2), and stops the uplink transmission other than the random access preamble transmission in the first cell (the cell 1) with respect to all the cells (the cell 1, the cell 2, the cell 3 and the cell 4).

The mobile station apparatus 1-1 removes all data held in the transmission HARQ storing unit 109 (the transmission HARQ buffer). The mobile station apparatus 1-1 releases the radio resources of the sounding reference signals assigned to all the cells (the cell 1, the cell 2, the cell 3 and the cell 4) and the radio resources of the assigned uplink control channels PUCCHs. In a case where the downlink assignment information and the uplink transmission permission information are acquired, the mobile station apparatus 1-1 discards the assignment information of all the downlink shared channels PDSCHs and the transmission permission information of the uplink shared channel PUSCH.

In a case where the transmission timing timer (the transmission timing timer 2) of the transmission timing group (the transmission timing group 2) including only the second cell without including the first cell expires, the mobile station apparatus 1-1 inhibits the uplink transmission other than the random access preamble transmission with respect to the cells (the cell 3 and the cell 4) of the transmission timing group (the transmission timing group 2) in which the transmission timing timer expires.

The mobile station apparatus 1-1 removes the data held in the transmission HARQ buffer corresponding to the cells (the cell 3 and the cell 4) of the transmission timing group (the transmission timing group 2) in which the transmission timing timer expires. The mobile station apparatus 1-1 discards the radio resources of the sounding reference signals assigned to the cells (the cell 3 and the cell 4) of the transmission timing group (the transmission timing group 2) in which the transmission timing timer expires.

In a case where the uplink transmission permission information of the cells (the cell 3 and the cell 4) of the transmission timing group (the transmission timing group 2) in which the transmission timing timer expires is acquired, the mobile station apparatus 1-1 discards the transmission permission information of the uplink shared channel PUSCH of the cells (the cell 3 and the cell 4) of the transmission timing group (the transmission timing group 2) in which the transmission timing timer expires.

In a case where the transmission timing timer (the transmission timing timer 1) of the transmission timing group (the transmission timing group 1) including the first cell expires, the base station apparatus 3-1 stops the transmission timing timer (the transmission timing timer 2) of the transmission timing group (the cell 3 and the cell 4) including only the second cell, stops the assignment of the uplink shared PUSCH channel to all the cells of the mobile station apparatus 1-1, and removes all the data held in the reception HARQ storing unit 221 (hereinafter, referred to as a reception HARQ buffer). The base station apparatus 3-1 releases the radio resources of the sounding reference signals assigned to the all cells (the cell 1, the cell 2, the cell 3 and the cell 4) and the radio resources of the uplink control channels PUCCHs assigned to the mobile station apparatus 1-1.

In a case where the transmission timing timer (the transmission timing timer 2) of the transmission timing group (the transmission timing group 2) including only the second cell expires, the base station apparatus 3-1 stops the assignment of the uplink shared channel PUSCH to the cells (the cell 3 and the cell 4) included in the transmission timing group (the transmission timing group 2) in which the transmission timing timer expires.

The base station apparatus 3-1 removes the data, which is held in the reception HARQ buffer, for the cells (the cell 3 and the cell 4) included in the transmission timing group (the transmission timing group 2) in which the transmission timing timer expires. The base station apparatus 3-1 releases the radio resources of the sounding reference signals assigned to the cells (the cell 3 and the cell 4) included in the transmission timing group (the transmission timing group 2) in which the transmission timing timer assigned to the mobile station apparatus 1-1 expires.

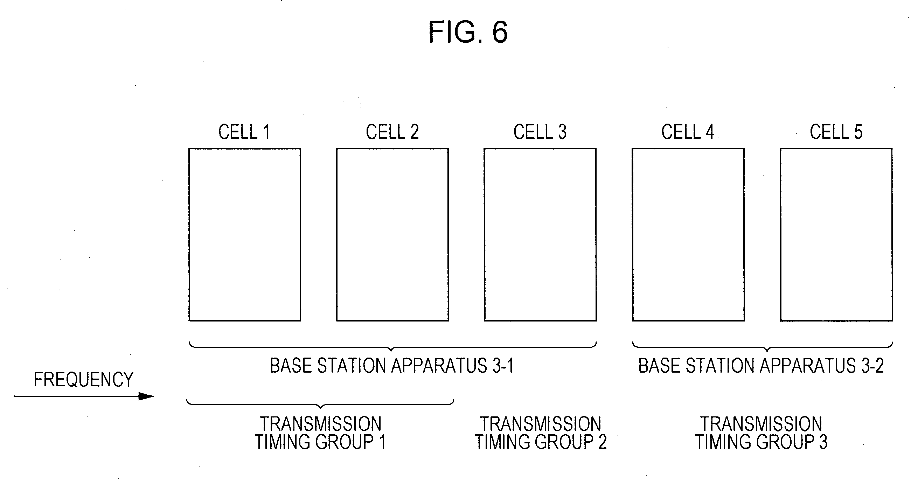

Hereinafter, an example in which the base station apparatus that provides the cells of the plurality of the transmission timing groups performs the communication through the dual connect will be described. For example, as shown in Fig. 6, the base station apparatus 3-1 provides the cell 1, the cell 2 and the cell 3, and the base station apparatus 3-2 provides the cell 4 and the cell 5. It is assumed that the cell 1 and the cell 2 are the transmission timing group (the transmission timing group 1) having the same transmission timing, the cell 3 is the transmission timing group (the transmission timing group 2) having a different transmission timing, and the cell 4 and the cell 5 are the transmission timing group (the transmission timing group 3) having the same transmission timing different from the other transmission timing groups.

It is assumed that the cell 1 is the first cell, and the other cells are the second cells (the cell 2, the cell 3, the cell 4 and the cell 5). The base station apparatus 3-1 assigns the physical uplink control channel PUCCH of the cell 1 to the mobile station apparatus 1-1, and the base station apparatus 3-2 assigns the physical uplink control channel PUCCH of the cell 4 to the mobile station apparatus 1-1.

In a case where the apparatus is in the dual connect by the information indicating whether or not the communication is performed through the dual connect and the transmission timing timer of the transmission timing group (the transmission timing group 1) including the cell 1 as the first cell expires, the mobile station apparatus 1-1 stops the transmission timing timer of the transmission timing group (the transmission timing group 2) provided by the base station apparatus 3-1 other than the transmission timing group (the transmission timing group 1) including the first cell. The mobile station apparatus 1-1 inhibits the uplink transmission other than the random access preamble transmission in the first cell (the cell 1) with respect to the cells (the cell 1, the cell 2 and the cell 3) provided by the base station apparatus 3-1.

The mobile station apparatus 1-1 removes all the data held in the transmission HARQ buffer corresponding to the cells (the cell 1, the cell 2 and the cell 3) of the base station apparatus 3-1 (or flashes the transmission HARQ buffer corresponding to the cells (the cell 1, the cell 2 and the cell 3) of the base station apparatus 3-1).

The mobile station apparatus 1-1 releases the radio resources of the sounding reference signals assigned to the cells (the cell 1, the cell 2 and the cell 3) of the base station apparatus 3-1 and the radio resources of the uplink control channel PUCCH assigned to the first cell. In a case where the uplink transmission permission information for the cells (the cell 1, the cell 2 and the cell 3) of the base station apparatus 3-1 is acquired, the mobile station apparatus 1-1 discards the transmission permission information of the uplink shared channel PUSCH.

In a case where the transmission timing timer of the transmission timing group (the transmission timing group 2) that does not include the first cell in the dual connect state, the mobile station apparatus 1-1 inhibits the uplink transmission other than the random access preamble transmission in the cell (the cell 3) of the transmission timing group (the transmission timing group 2) in which the transmission timing timer expires.

The mobile station apparatus 1-1 removes the data held in the transmission HARQ buffer corresponding to the cell (the cell 3) of the transmission timing group (the transmission timing group 2) in which the transmission timing timer expires.

The mobile station apparatus 1-1 releases the radio resources of the sounding reference signals assigned to the cell (the cell 3) of the transmission timing group (the transmission timing group 2) in which the transmission timing timer expires. In a case where the uplink transmission permission information for the cell (the cell 3) of the transmission timing group (the transmission timing group 2) in which the transmission timing timer expires is acquired, the mobile station apparatus 1-1 discards the transmission permission information of the uplink shared channel PUSCH.

In a case where the transmission timing timer of the transmission timing group (the transmission timing group 3) of the base apparatus 3-2 expires, the mobile station apparatus 1-1 inhibits the uplink transmission other than the random access preamble transmission with respect to the cells (the cell 4 and the cell 5) of the transmission timing group (the transmission timing group 3) of the base station apparatus 3-2. The mobile station apparatus 1-1 removes the data held in the transmission HARQ buffer corresponding to the cells (the cell 4 and the cell 5) of the transmission timing group (the transmission timing group 3) in which the transmission timing timer expires).

The mobile station apparatus 1-1 releases the radio resources of the sounding reference signal and the radio resources of the uplink control channel PUCCH assigned to the cells (the cell 4 and the cell 5) of the transmission timing group (the transmission timing group 3) in which the transmission timing timer expires. In a case where the uplink transmission permission information for the cells (the cell 4 and the cell 5) of the transmission timing group (the transmission timing group 3) in which the transmission timing timer expires is acquired, the mobile station apparatus 1-1 discards the transmission permission information of the uplink shared channel PUSCH.

In a case where a plurality of transmission timing groups is present in the base station apparatus 3-2, and also in a case where the transmission timing timer of the transmission timing group included in the cell to which the radio resources of the uplink control channel PUCCH are assigned the expires, the mobile station apparatus 1-1 performs the same process as that in the case where the transmission timing timer of the transmission timing group including the first cell expires.

In a case where the transmission timing timer of the transmission timing group that does not include the cell to which the radio resources of the uplink control channel PUCCH are assigned expires, the same process as that in the case where the transmission timing timer of the transmission timing group including the second cell without including the first cell expires is performed.

That is, the transmission timing timer of the transmission timing group provided by the base station apparatus 3-2 other than the transmission timing group including the cell to which the radio resources of the uplink control channel PUCCH are assigned is stopped. The mobile station apparatus 1-1 inhibits the uplink transmission other than the random access preamble transmission in the cell to which the radio resources of the uplink control channel PUCCH are assigned with respect to the cell provided by the base station apparatus 3-2. The mobile station apparatus 1-1 removes all the data held in the transmission HARQ buffer corresponding to the cell of the base station apparatus 3-2.

The mobile station apparatus 1-1 releases the radio resources of the sounding reference signal assigned to the cell of the base station apparatus 3-2 and the assigned radio resources of the uplink control channel PUCCH. In a case where the uplink transmission permission information for the cell of the base station apparatus 3-2 is acquired, the mobile station apparatus 1-1 discards the transmission permission information of the uplink shared channel PUSCH.

As described above, in the dual connect state, the mobile station apparatus 1-1 performs the control related to the transmission timing group for each base station apparatus. By doing this, the base station apparatus can perform data transmission and reception control on the mobile station apparatus 1-1 regardless of the operation of the other base station apparatus. Each base station apparatus can perform efficient transmission control of the mobile station apparatus by notifying of the transmission timing information of each transmission timing group, stopping the notification, continuing the transmission timing timer, stopping the transmission timing timer, or allowing the transmission timing to be valid or invalid in consideration of the data amount from the mobile station apparatus.

It has been described in the above-described embodiment that in the case where the transmission timing timer expires, the operation example which is related to the cell in which the transmission timing timer expires and is related to the stop of the transmission process of the uplink of the cell. However, in a case where the transmission timing timer expires, the downlink reception process may be stopped in addition to the stop of the uplink transmission process.

Although the embodiment of the present invention has been described in detail with reference to the drawings, the specific structure is not limited thereto, but various design changes are possible without departing from the gist of the present invention. The base station apparatus 3-1 may be, for example, a cell other than the macrocell, or may be, for example, a small cell.

The present invention can be described as stated above.
(1) A wireless communication system of the present invention is a wireless communication system in which one or more base station apparatuses communicate with a terminal apparatus through a plurality of cells, in which the plurality of cells is grouped into a first group which includes one or more cells having a first uplink transmission timing and includes a first cell, and a second group which includes one or more second cells having a second uplink transmission timing different from the first uplink transmission timing. Control is performed using transmission timing timers started or restarted in a case where transmission timing information is applied to the respective groups, in which the base station apparatus notifies the terminal apparatus of information related to the first group and the second group, information of the transmission timing timers and control information for controlling the groups, and in which in a case where the connection with the plurality of base station apparatuses is instructed by the control information and also in a case where the transmission timing timer of the group expires, the terminal apparatus removes data of a transmission HARQ buffer corresponding to the cell of the group in which the transmission timing timer expires.
(2) In the wireless communication system described in (1), in a case where the connection with one base station apparatus is instructed by the control information and also in a case where the transmission timing timer of the first group expires, the terminal apparatus removes all data of a transmission HARQ buffer corresponding to plurality of cells in a case where the transmission timing timer of the first group expires, and removes data of a transmission HARQ buffer corresponding to the cell of the second group in which the transmission timing timer expires in a case where the transmission timing timer of the second group expires.
(3) In the wireless communication system described in (2), in a case where the connection with the plurality of base station apparatuses is instructed by the control information and also in a case where the transmission timing timer of the group expires, the terminal apparatus releases an uplink reference signal and an uplink control channel assigned to the cell of the group in which the transmission timing timer expires.
(4) In the wireless communication system described in (3), in a case where the connection with one base station apparatus is instructed by the control information, the terminal apparatus releases uplink reference signals and uplink control channels assigned to the plurality of cells in a case where the transmission timing timer of the first group expires, and releases uplink reference signals assigned to the cells of the second group in which the transmission timing timer expires in a case where the transmission timing timer of the second group expires.
(5) A base station apparatus of the present invention is a base station apparatus that communicates with a terminal apparatus through a plurality of cells, together with a first base station apparatus. The plurality of cells is grouped into a first group which includes one or more cells having a first uplink transmission timing and includes a first cell, and a second group which includes one or more second cells having a second uplink transmission timing different from the first uplink transmission timing, in which control is performed using transmission timing timers started or restarted in a case where transmission timing information is applied to the respective groups, and in which the base station apparatus receives information related to the groups from the first base station apparatus, and notifies the terminal apparatus of information related to the first group and the second group, the information of the transmission timing timer, and control information for controlling the group.
(6) A terminal apparatus of the present invention is a terminal apparatus that communicates with one or more base station apparatuses through a plurality of cells. The plurality of cells is grouped into a first group which includes one or more cells having a first uplink transmission timing and includes a first cell, and a second group which includes one or more second cells having a second uplink transmission timing different from the first uplink transmission timing, in which control is performed using transmission timing timers started or restarted in a case where transmission timing information is applied to the respective groups, in which the terminal apparatus receives information related to the first group and the second group, information of the transmission timing timer, and control information for controlling the groups from the first base station apparatus, and in which in a case where the connection with the plurality of base station apparatuses is instructed by the control information and also in a case where the transmission timing timer of the group expires, the terminal apparatus removes data of a transmission HARQ buffer corresponding to the cell of the group in which the transmission timing timer expires.
(7) In the terminal apparatus described in (6), in a case where the connection with one base station apparatus is instructed by the control information and also in a case where the transmission timing timer of the first group expires, the terminal apparatus removes all data of a transmission HARQ buffer corresponding to plurality of cells in a case where a transmission timing timer of the first group expires, and removes data of a transmission HARQ buffer corresponding to the cell of the second group in which the transmission timing timer expires in a case where a transmission timing timer of the second group expires.
(8) In the terminal apparatus described in (7), in a case where the connection with the plurality of base station apparatuses is instructed by the control information and also in a case where the transmission timing timer of the group expires, the terminal apparatus releases an uplink reference signal and an uplink control channel assigned to the cell of the group in which the transmission timing timer expires.
(9) In the terminal apparatus described in (8), in a case where the connection with one base station apparatus is instructed by the control information, the terminal apparatus releases uplink reference signals and uplink control channels assigned to the plurality of cells in a case where the transmission timing timer of the first group expires, and releases uplink reference signals assigned to the cells of the second group in which the transmission timing timer expires in a case where the transmission timing timer of the second group expires.
(10) A wireless communication method of the present invention is a wireless communication method of a wireless communication system in which one or more base station apparatuses communicate with a terminal apparatus through a plurality of cells, the wireless communication method including grouping plurality of cells into a first group which includes one or more cells having a first uplink transmission timing and includes a first cell, and a second group which includes one or more second cells having a second uplink transmission timing different from the first uplink transmission timing; performing control using transmission timing timers started or restarted in a case where transmission timing information is applied to the respective groups; causing the base station apparatus to notify the terminal apparatus of information related to the first group and the second group, information of the transmission timing timers and control information for controlling the group; causing the terminal apparatus to remove data of a transmission HARQ buffer corresponding to the cell of the group in which the transmission timing timer expires in a case where the connection with the plurality of base station apparatuses is instructed by the control information and also in a case where the transmission timing timer of the group expires; causing the terminal apparatus to remove all data of a transmission HARQ buffer corresponding to the plurality of cells in a case where the connection with one base station apparatus is instructed by the control information and also in a case where the transmission timing timer of the first group expires; and causing the terminal apparatus to remove data of a transmission HARQ buffer corresponding to the cell of the second group in which the transmission timing timer expires in a case where the transmission timing timer of the second group expires.
(11) An integrated circuit of the present invention is an integrated circuit applied to a base station apparatus that communicates with a terminal apparatus through a plurality of cells, together with a first base station apparatus. The plurality of cells is grouped into a first group which includes one or more cells having a first uplink transmission timing and includes a first cell, and a second group which includes one or more second cells having a second uplink transmission timing different from the first uplink transmission timing, in which control is performed using transmission timing timers started or restarted in a case where transmission timing information is applied to the respective groups, and in which the integrated circuit includes means for receiving information related to the groups form the first base station apparatus, and means for notifying the terminal apparatus of information related to the first group and the second group, information of the transmission timing timers, and control information for controlling the groups.
(12) An integrated circuit of the present invention is an integrated circuit applied to a terminal apparatus that communicates with one or more base station apparatuses through a plurality of cells, in which the plurality of cells is grouped into a first group which includes one or more cells having a first uplink transmission timing and includes a first cell, and a second group which includes one or more second cells having a second uplink transmission timing different from the first uplink transmission timing, in which control is performed using transmission timing timers started or restarted in a case where transmission timing information is applied to the respective groups, and in which the integrated circuit includes means for receiving information related to the first group and the second group, information of the transmission timing timer, and control information for controlling the groups from the base station apparatus, and means for removing data of a transmission HARQ buffer corresponding to the cell of the group in which the transmission timing timer expires in a case where the connection with the plurality of base station apparatuses is instructed by the control information and also in a case where the transmission timing timer of the group expires.
(13) The integrated circuit described in (12) further includes means for removing all data of a transmission HARQ buffer corresponding to the plurality of cells in a case where the connection with one base station apparatus is instructed by the control information and also in a case where the transmission timing timer of the first group expires, and means for removing data of a transmission HARQ buffer corresponding to the cell of the second group in which the transmission timing timer expires in a case where the transmission timing timer of the second group expires.

Although it has been described in the embodiment that an example of the terminal apparatus or the communication apparatus is the mobile station apparatus, the present invention is not limited thereto. The present invention can also be applied to terminal apparatuses or communication apparatuses of stationary or non-movable electronic apparatuses which are installed indoors or outdoors, such as AV apparatuses, kitchen apparatuses, cleaning and washing machines, air conditioners, office apparatuses, vending machines, and other home appliances.

For the sake of convenience in description, the mobile station apparatus 1-1, the base station apparatus 3-1 and the base station apparatus 3-2 of the embodiment have been described with reference to the functional block diagrams. However, the mobile station apparatus or the base station apparatus may be controlled by recording programs for realizing the functions of the respective units of the mobile station apparatus 1-1, the base station apparatus 3-1 and the base station apparatus 3-2 and some of the functions thereof on a computer-readable recording medium and causing a computer system to read and execute the program recorded on the recording medium. The term "computer system" means a computer system that includes an OS or hardware such as peripheral devices.

The term "computer-readable recording medium" means a portable medium, such as a flexible disk, a magneto-optical disk, a ROM, or a CD-ROM, or a storing apparatus such as a hard disc provided in the computer system. The "computer-readable recording medium" may include a recording medium that dynamically stores the program in a short period of time, such as a communication cable used in a case where the program is transmitted through a network, such as the Internet, or a communication line, such as a telephone line, and a recording medium that stores the program for a predetermined period of time, such as a volatile memory in a computer system that serves as a server or a client in this case. The "program" may be a program that realizes some of the above-mentioned functions or a program that implements the above-mentioned functions in combination with the program which has been recorded on the computer system.

The functional blocks used in the embodiment may be realized as LSIs which are typical integrated circuits. Each functional block may be individually integrated into a chip, or some or all of the functional blocks may be integrated into a chip. A method for achieving the integrated circuit is not limited to the LSI, but may be realized by a dedicated circuit or a general-purpose processor. In addition, in a case where a technique for achieving an integrated circuit which replaces the LSI technique will be developed with the progress of a semiconductor technique, the integrated circuit manufactured by the developed technique can also be used.

The embodiment of the present invention has been described with reference to the drawings. However, the detailed structure is not limited to the above-described embodiment and the present invention also includes a change in the design within the scope and spirit of the invention.

### DESCRIPTION OF REFERENCE NUMERALS

- 1-1 to 1-3: Mobile station apparatus
- 3-1, 3-2: Base station apparatus
- 101, 201: Data generating unit
- 103, 203: Transmission data storing unit
- 105, 205: Transmission HARQ processing unit
- 107, 207: Transmission processing unit
- 109, 209: Wireless unit
- 111, 211: Reception processing unit
- 113, 213: Reception HARQ processing unit
- 115, 215: MAC information extracting unit
- 117, 217: PHY control unit
- 119, 219: MAC control unit
- 121, 221: Data processing unit
- 123, 223: RRC control unit
- 225: Inter-base-station-apparatus communication unit
- 227: MME communication unit
- 229: GW communication unit

## Claims

1. A wireless communication system in which a first base station apparatus and a second base station apparatus communicate with a terminal apparatus through a plurality of cells,
wherein the plurality of cells is grouped into a first group which includes one or more cells having a first uplink transmission timing and includes a first cell belonging to the first base station apparatus, a second group which includes one or more cells having a second uplink transmission timing different from the first uplink transmission timing and includes a second cell belonging to the second base station apparatus, and a third group which includes one or more third cells having a third uplink transmission timing different from the first uplink transmission timing and the second uplink transmission timing and belonging to the first base station apparatus or the second base station apparatus,
wherein control is performed using transmission timing timers started or restarted in a case where transmission timing information is applied to the respective groups,
wherein the first base station apparatus notifies the terminal apparatus of information related to the groups and information of the transmission timing timers, and
wherein the terminal apparatus manages the groups based on the information related to the groups, and controls the groups for each base station apparatus.

2. The wireless communication system according to claim 1,
wherein the terminal apparatus is adapted to:
remove data of a transmission HARQ buffer corresponding to the cell of the first group and the cell of the third group belonging to the first base station apparatus in a case where a transmission timing timer of the first group expires;
remove data of a transmission HARQ buffer corresponding to the cell of the second group and the cell of the third group belonging to the second base station apparatus in a case where a transmission timing timer of the second group expires; and
remove data of a transmission HARQ buffer corresponding to the cell of the third group in which a transmission timing timer expires in a case where the transmission timing timer of the third group expires.

3. The wireless communication system according to claim 2,
wherein an uplink control channel is configured as configuration for the second cell belonging to the second base station apparatus.

4. A terminal apparatus that communicates with a first base station apparatus and a second base station apparatus through a plurality of cells,
wherein the plurality of cells is grouped into a first group which includes one or more cells having a first uplink transmission timing and includes a first cell belonging to the first base station apparatus, a second group which includes one or more cells having a second uplink transmission timing different from the first uplink transmission timing and includes a second cell belonging to the second base station apparatus, and a third group which includes one or more third cells having a third uplink transmission timing different from the first uplink transmission timing and the second uplink transmission timing and belonging to the first base station apparatus or the second base station apparatus,
wherein control is performed using transmission timing timers started or restarted in a case where transmission timing information is applied to the respective groups, and
wherein the terminal apparatus receives information related to the groups and information of the transmission timing timers from the first base station apparatus,
manages the groups based on the information related to the groups, and
controls the groups for each base station apparatus.

5. The terminal apparatus according to claim 4,
wherein the terminal apparatus is adapted to:
remove data of a transmission HARQ buffer corresponding to the cell of the first group and the cell of the third group belonging to the first base station apparatus in a case where the transmission timing timer of the first group expires;
remove data of a transmission HARQ buffer corresponding to the cell of the second group and the cell of the third group belonging to the second base station apparatus in a case where a transmission timing timer of the second group expires; and
remove data of a transmission HARQ buffer corresponding to the cell of the third group in which a transmission timing timer expires in a case where the transmission timing timer of the third group expires.

6. The terminal apparatus according to claim 5,
wherein the terminal apparatus is adapted to:
release an uplink control channel assigned to the first cell in the case where the transmission timing timer of the first group expires; and
release an uplink control channel assigned to the second cell in the case where the transmission timing timer of the second group expires.

7. The terminal apparatus according to claim 6,
wherein the terminal apparatus is adapted to:
inhibit uplink transmission in the cell of the first group and the cell of the third group belonging to the first base station apparatus, other than random access preamble transmission in the first cell, in a case where the transmission timing timer of the first group is stopped; and
inhibit uplink transmission in the cell of the second group and the cell of the third group belonging to the second base station apparatus, other than random access preamble transmission in the second cell, in the case where the transmission timing timer of the second group is stopped.

8. A base station apparatus that communicates with a terminal apparatus through a plurality of cells, together with a first base station apparatus,
wherein the plurality of cells is grouped into a first group which includes one or more cells having a first uplink transmission timing and includes a first cell belonging to the first base station apparatus, a second group which includes one or more cells having a second uplink transmission timing different from the first uplink transmission timing and includes a second cell belonging to the base station apparatus, and a third group which includes one or more third cells having a third uplink transmission timing different from the first uplink transmission timing and the second uplink transmission timing and belonging to the first base station apparatus or the base station apparatus,
wherein control is performed using transmission timing timers started or restarted in a case where transmission timing information is applied to the respective groups, and
wherein the base station apparatus receives information related to the second group and the third group of the first base station apparatus and information of the transmission timing timers from the first base station apparatus, and
notifies the terminal apparatus of information related to the first group, the second group and the third group and information of the transmission timing timers.

9. A wireless communication method of a wireless communication system in which a first base station apparatus and a second base station apparatus communicate with a terminal apparatus through a plurality of cells, the method comprising:
grouping the plurality of cells into a first group which includes one or more cells having a first uplink transmission timing and includes a first cell belonging to the first base station apparatus, a second group which includes one or more cells having a second uplink transmission timing different from the first uplink transmission timing and includes a second cell belonging to the second base station apparatus, and a third group which includes one or more third cells having a third uplink transmission timing different from the first uplink transmission timing and the second uplink transmission timing and belonging to the first base station apparatus or the second base station apparatus;
performing control using transmission timing timers started or restarted in a case where transmission timing information is applied to the respective groups;
a step of notifying, by the first base station apparatus, the terminal apparatus of information related to the groups and information of the transmission timing timers;
a step of removing, by the terminal apparatus, data of a transmission HARQ buffer corresponding to the cell of the first group and the cell of the third group belonging to the first base station apparatus in a case where a transmission timing timer of the first group expires;
a step of removing, by the terminal apparatus, data of a transmission HARQ buffer corresponding to the cell of the second group and the cell of the third group belonging to the second base station apparatus in a case where a transmission timing timer of the second group expires; and
a step of removing, by the terminal apparatus, data of a transmission HARQ buffer corresponding to the cell of the third group in which a transmission timing timer expires in a case where the transmission timing timer of the third group expires.

10. An integrated circuit applied to a second base station apparatus that communicates with a terminal apparatus through a plurality of cells, together with a first base station apparatus,
wherein the plurality of cells is grouped into a first group which includes one or more cells having a first uplink transmission timing and includes a first cell belonging to the first base station apparatus, a second group which includes one or more cells having a second uplink transmission timing different from the first uplink transmission timing and includes a second cell belonging to the second base station apparatus, and a third group which includes one or more third cells having a third uplink transmission timing different from the first uplink transmission timing and the second uplink transmission timing and belonging to the first base station apparatus or the second base station apparatus,
wherein control is performed using transmission timing timers started or restarted in a case where transmission timing information is applied to the respective groups, and
wherein the integrated circuit includes:
means for receiving information related to the second group and the third group of the first base station apparatus and information of the transmission timing timer from the first base station apparatus, and
means for notifying the terminal apparatus of information related to the first group, the second group and the third group and the information of the transmission timing timer.

11. An integrated circuit applied to a terminal apparatus that communicates with a first base station apparatus and a second base station apparatus through a plurality of cells,
wherein the plurality of cells is grouped into a first group which includes one or more cells having a first uplink transmission timing and includes a first cell belonging to the first base station apparatus, a second group which includes one or more cells having a second uplink transmission timing different from the first uplink transmission timing and includes a second cell belonging to the second base station apparatus, and a third group which includes one or more third cells having a third uplink transmission timing different from the first uplink transmission timing and the second uplink transmission timing and belonging to the first base station apparatus or the second base station apparatus,
wherein control is performed using transmission timing timers started or restarted in a case where transmission timing information is applied to the respective groups, and
wherein the integrated circuit includes:
means for receiving information related to the groups and information of the transmission timing timer from the first base station apparatus,
means for managing the groups based on the information related to the groups, and
means for controlling the groups for each base station apparatus.

12. The integrated circuit according to claim 11, further comprising:
means for removing data of a transmission HARQ buffer corresponding to the cell of the first group and the cell of the third group belonging to the first base station apparatus in a case where a transmission timing timer of the first group expires;
means for removing data of a transmission HARQ buffer corresponding to the second group and the cell of the third group belonging to the second base station apparatus in a case where a transmission timing timer of the second group expires; and
means for removing data of a transmission HARQ buffer corresponding to the cell of the third group in which a transmission timing timer expires in a case where the transmission timing timer of the third group expires.
